# FASCICULE DE BREVET EUROPEEN

(11) **EP 4 045 299 B1**
(45) Date de publication et mention de la délivrance du brevet: **13.12.2023**
(21) Numéro de dépôt: 20797826.3
(22) Date de dépôt: 09.10.2020
(51) Int. Cl.: B29D 30/24, B60C 9/06, B60C 9/08, B60C 9/20, B60C 9/22, B29D 30/00, B29D 30/42, B60C 9/04, B29D 30/30, B29D 30/36, B29D 30/06

(54) **PNEUMATIQUE PRESENTANT UNE UNIFORMITE AMELIOREE ET SON PROCEDE DE FABRICATION**
REIFEN MIT VERBESSERTER GLEICHMÄSSIGKEIT UND VERFAHREN ZU SEINER HERSTELLUNG
TYRE HAVING IMPROVED UNIFORMITY AND METHOD FOR MANUFACTURING SAME

(30) Priorité: 16.10.2019 FR 1911531
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: PROST, Pascal, 63040 CLERMONT-FERRAND Cedex 9 (FR); ROTY, Gael, 63040 CLERMONT-FERRAND Cedex 9 (FR); MUHLHOFF, Olivier, 63040 CLERMONT-FERRAND Cedex 9 (FR)
(74) Mandataire: M.F.P. Michelin
(86) Numéro de dépôt international: PCT/FR2020/051792
(87) Numéro de publication internationale: WO 2021/074510

(56) Documents cités:
- EP-A1- 0 319 088
- EP-A1- 1 623 819
- WO-A1-2019/122619
- FR-A- 1 413 102
- FR-A1- 2 207 010
- FR-A1- 2 797 213
- US-A- 5 709 760

## Description

La présente invention est relative à un procédé de fabrication d'un pneumatique et à un pneumatique obtenu par ce procédé.

On connaît de l'état de la technique des pneumatiques comprenant un sommet, deux flancs, deux bourrelets, chaque flanc reliant chaque bourrelet au sommet. Chaque bourrelet comprend au moins un élément de renfort circonférentiel, généralement sous la forme d'une tringle.

Le pneumatique comprend également une armature de carcasse ancrée dans chaque bourrelet et s'étendant dans chaque flanc et dans le sommet. L'armature de carcasse comprend une couche de carcasse comprenant une portion enroulée autour de chaque élément de renfort circonférentiel. La couche de carcasse est délimitée axialement par deux bords axiaux de la couche de carcasse et comprend des éléments de renfort filaires de carcasse s'étendant axialement d'un bord axial à l'autre bord axial de la couche de carcasse. Chaque élément de renfort filaire de carcasse s'étend selon une direction principale de chaque élément de renfort filaire de carcasse formant, avec la direction circonférentielle du pneumatique, un angle constant allant de 80° à 90° sur l'ensemble de la largeur axiale de la couche de carcasse entre les deux bords axiaux de la nappe de carcasse.

Le sommet comprend une bande de roulement destinée à venir en contact avec un sol lors du roulage du pneumatique ainsi qu'une armature de sommet agencée radialement entre la bande de roulement et l'armature de carcasse. L'armature de sommet comprend une armature de travail comprenant deux couches de travail. Chaque couche de travail est délimitée axialement par deux bords axiaux de ladite couche de travail et comprend des éléments de renfort filaires de travail s'étendant axialement d'un bord axial à l'autre bord axial de ladite couche de travail les uns sensiblement parallèlement aux autres selon une direction principale des éléments de renfort filaires de travail formant, avec la direction circonférentielle du pneumatique, un angle strictement supérieur à 10°, par exemple égal à 26°. La direction principale de chaque élément de renfort filaire de travail d'une des couches de travail et la direction principale de chaque élément de renfort filaire de travail de l'autre des couches de travail forment, avec la direction circonférentielle du pneumatique, dans la portion du pneumatique délimitée axialement par les bords axiaux de l'armature de travail, des angles d'orientations opposées, soit ici +26° et -26°.

Généralement, l'armature de sommet comprend également une armature de frettage agencée radialement à l'extérieur de l'armature de travail, l'armature de frettage étant délimitée axialement par deux bords axiaux et comprenant au moins un élément de renfort filaire de frettage enroulé circonférentiellement hélicoïdalement de façon à s'étendre axialement d'un bord axial à l'autre bord axial de l'armature de frettage selon une direction principale du ou de chaque élément de renfort filaire de frettage.

Traditionnellement et de façon connue, on fabrique un tel pneumatique en mettant en oeuvre plusieurs étapes d'un procédé de fabrication utilisant un support de fabrication déformable de forme sensiblement cylindrique autour d'un axe principal et pouvant également prendre une forme torique après déformation.

Au cours de ce procédé, on enroule autour du support présentant sa forme sensiblement cylindrique autour de son axe principal, une nappe d'étanchéité, généralement à base de butyl.

Puis, radialement à l'extérieur de la nappe d'étanchéité, on enroule une nappe de carcasse destinée à former la couche de carcasse. La nappe de carcasse est délimitée axialement par deux bords axiaux de la nappe de carcasse et comprend les éléments de renfort filaires de carcasse s'étendant sensiblement parallèlement les uns aux autres axialement d'un bord axial à l'autre bord axial de la nappe de carcasse selon une direction principale des éléments de renfort filaires de carcasse formant, avec la direction circonférentielle du support, un angle initial de chaque élément de renfort filaire de carcasse allant de 80° à 90°.

Lors de l'étape d'enroulage de la nappe de carcasse, la nappe de carcasse présente deux bords d'extrémité circonférentielle s'étendant axialement d'un bord axial à l'autre bord axial de la nappe de carcasse. Lors de l'étape d'enroulage, on enroule la nappe de carcasse de façon à former une jonction entre les deux bords d'extrémité circonférentielle par recouvrement de façon à former une superposition radiale entre plusieurs éléments de renfort filaires de carcasse d'un des bords d'extrémité circonférentielle et plusieurs éléments de renfort filaires de carcasse de l'autre des bords d'extrémité circonférentielle, et ce, sur l'ensemble de la largeur de la nappe de carcasse entre les deux bords axiaux de la nappe de carcasse.

Ensuite, on agence les deux éléments de renfort circonférentiels autour de la nappe de carcasse et on retourne axialement vers l'intérieur chaque bord axial de la nappe de carcasse de façon à recouvrir radialement chaque élément de renfort circonférentiel par un des bords axiaux de la nappe de carcasse et à former une portion de la nappe de carcasse enroulée autour de chaque élément de renfort circonférentiel.

On obtient alors un assemblage de la couche d'étanchéité, de la nappe de carcasse et des éléments de renfort circonférentiel de forme sensiblement cylindrique autour de l'axe principal du support.

Ensuite, on déforme l'assemblage de forme sensiblement cylindrique de façon à obtenir un assemblage de forme sensiblement torique de sorte que la direction principale de chaque élément de renfort filaire de carcasse forme, avec la direction circonférentielle du support, un angle final de chaque élément de renfort filaire de carcasse sensiblement constant sur l'ensemble de la largeur de la nappe de carcasse entre les deux bords axiaux de la nappe de carcasse et identique à l'angle initial. Lors de cette déformation, le nombre élevé d'éléments de renfort filaires de carcasse d'un des bords d'extrémité circonférentielle et le nombre élevé d'éléments de renfort filaires de carcasse de l'autre des bords d'extrémité circonférentielle situés dans la jonction assurent un maintien de la jonction malgré les efforts circonférentiels exercés sur la nappe de carcasse. En utilisant des nombres inférieurs d'éléments de renfort filaires de carcasse se recouvrant radialement dans la jonction, l'étape de déformation entraînerait une ouverture de la jonction et la création d'une distance circonférentielle entre les deux bords d'extrémité circonférentielle que l'on ne peut maitriser.

Puis, on enroule, radialement à l'extérieur de la nappe de carcasse de forme sensiblement torique autour de l'axe principal du support, successivement deux nappes de travail destinée à former les deux couches de travail. Chaque nappe de travail est délimitée axialement par deux bords axiaux de la nappe de travail et comprend les éléments de renfort filaires de travail s'étendant sensiblement parallèlement les uns aux autres axialement d'un bord axial à l'autre bord axial de la nappe de travail selon une direction principale des éléments de renfort filaires de travail formant, avec la direction circonférentielle du support, un angle des éléments de renfort filaires de travail sensiblement égal à 26°.

Ensuite, on agence, radialement à l'extérieur de la nappe de travail la plus radialement extérieure, l'armature de frettage et la bande de roulement. L'ensemble ainsi formé, appelée ébauche crue du pneumatique en raison de la présence de compositions réticulables à l'état non réticulées, est ensuite placée dans un moule de réticulation pour procéder au moulage de l'ébauche crue, notamment des sculpture du pneumatique, ainsi qu'à la réticulation des compositions réticulables.

On note qu'en raison des nombres élevés d'éléments de renfort filaires de carcasse se recouvrant radialement dans la jonction, le pneumatique obtenu présente d'une part des défauts d'aspects sur les flancs, comme cela est expliqué dans WO2019180352 et d'autre part des défauts d'uniformité à haute vitesse, ces défauts étant liés à la densité localisée plus élevée d'éléments de renfort filaires de carcasse dans la jonction par rapport à la densité d'éléments de renfort filaires de carcasse hors de la jonction.

Des procédés décrivant des jonctions sont connus de FR2207010A1, US5709760A et EP0319088A1.

L'invention a pour but de proposer un pneumatique ne présentant pas les défauts liés à la densité élevée d'éléments de renfort filaires de carcasse localisée dans la jonction.

A cet effet, l'invention a pour objet un procédé de fabrication d'un pneumatique comprenant un sommet, deux flancs, deux bourrelets, chaque flanc reliant chaque bourrelet au sommet, le pneumatique comprenant une armature de carcasse ancrée dans chaque bourrelet et s'étendant dans chaque flanc et radialement intérieurement au sommet, l'armature de carcasse comprenant au moins une couche de carcasse, le sommet comprenant :
- une bande de roulement destinée à venir en contact avec un sol lors du roulage du pneumatique,
- une armature de sommet agencée radialement entre la bande de roulement et l'armature de carcasse, l'armature de sommet comprenant une armature de travail comprenant une unique couche de travail,
procédé dans lequel :
- on forme par enroulement d'une nappe de carcasse ou de plusieurs nappes de carcasse autour d'un support présentant une forme sensiblement cylindrique autour d'un axe principal, au moins un ensemble de carcasse enroulé destiné à former la couche de carcasse, l'ensemble de carcasse enroulé étant délimité axialement par deux bords axiaux de l'ensemble de carcasse enroulé et comprenant des éléments de renfort filaires de carcasse s'étendant sensiblement parallèlement les uns aux autres axialement d'un bord axial à l'autre bord axial de l'ensemble de carcasse enroulé, chaque élément de renfort filaire de carcasse s'étendant, dans la ou chaque nappe de carcasse, selon une direction principale de chaque élément de renfort filaire de carcasse, la direction principale de chaque élément de renfort filaire de carcasse dans la ou chaque nappe de carcasse formant, avec la direction circonférentielle du support, un angle initial de chaque élément de renfort filaire de carcasse,
procédé dans lequel
- on forme par enroulement d'une nappe de travail ou de plusieurs nappes de travail, radialement à l'extérieur de l'ensemble de carcasse enroulé, un ensemble de travail enroulé destiné à former la couche de travail, l'ensemble de travail enroulé étant délimité axialement par deux bords axiaux de l'ensemble de travail enroulé et comprenant des éléments de renfort filaires de travail s'étendant sensiblement parallèlement les uns aux autres axialement d'un bord axial à l'autre bord axial de l'ensemble de travail enroulé, chaque élément de renfort filaire de travail s'étendant, dans la ou chaque nappe de travail, selon une direction principale de chaque élément de renfort filaire de travail, la direction principale de chaque élément de renfort filaire de travail dans la ou chaque nappe de travail formant, avec la direction circonférentielle du support, un angle initial de chaque élément de renfort filaire de travail, l'ensemble de carcasse enroulé et l'ensemble de travail enroulé formant un assemblage de forme sensiblement cylindrique autour de l'axe principal du support,
- on déforme l'assemblage de forme sensiblement cylindrique autour de l'axe principal du support de façon à obtenir un assemblage de forme sensiblement torique autour de l'axe principal du support de sorte que:
   - la direction principale de chaque élément de renfort filaire de carcasse forme, avec la direction circonférentielle du support:
      - un angle final de chaque élément de renfort filaire de carcasse, en valeur absolue, strictement inférieur à 80°, dans une portion de l'ensemble de carcasse enroulé s'étendant axialement à l'aplomb radial de l'ensemble de travail enroulé,
      - un angle final de chaque élément de renfort filaire de carcasse allant, en valeur absolue, de 80° à 90°, dans une portion de l'ensemble de carcasse enroulé destinée à s'étendre radialement dans chaque flanc,
   - la direction principale de chaque élément de renfort filaire de travail forme, avec la direction circonférentielle du support, un angle final de chaque élément de renfort filaire de travail, en valeur absolue, strictement supérieur à 10°,
   lors de l'étape de formation de l'ensemble de carcasse enroulé, l'ensemble de carcasse enroulé présentant deux bords d'extrémité circonférentielle s'étendant axialement d'un des bords axiaux à l'autre des bords axiaux de l'ensemble de carcasse enroulé, on met en oeuvre l'une des alternatives I, II, III suivantes:
   I - on forme l'ensemble de carcasse enroulé de façon à former une jonction entre les deux bords d'extrémité circonférentielle de l'ensemble de carcasse enroulé par aboutement sans former de superposition entre un élément de renfort filaire de carcasse d'un des bords d'extrémité circonférentielle de l'ensemble de carcasse enroulé et un élément de renfort filaire de carcasse de l'autre des bords d'extrémité circonférentielle de l'ensemble de carcasse enroulé, au moins dans la portion de l'ensemble de carcasse enroulé destinée à s'étendre axialement à l'aplomb radial de l'ensemble de travail enroulé,
   II - on forme l'ensemble de carcasse enroulé de façon à former une jonction entre les deux bords d'extrémité circonférentielle de l'ensemble de carcasse enroulé par recouvrement de façon à former une superposition radiale entre au moins un élément de renfort filaire de carcasse d'un des bords d'extrémité circonférentielle de l'ensemble de carcasse enroulé et au moins un élément de renfort filaire de carcasse de l'autre des bords d'extrémité circonférentielle de l'ensemble de carcasse enroulé, au moins dans la portion de l'ensemble de carcasse enroulé destinée à s'étendre axialement à l'aplomb radial de l'ensemble de travail enroulé, de sorte que, sans étape de formation de l'ensemble de travail enroulé préalablement à l'étape de déformation, l'étape de déformatior mise en oeuvre dans des conditions identiques entraînerait une ouverture de la jonction,
   III - on forme l'ensemble de carcasse enroulé de sorte que les deux bords d'extrémité circonférentielle de l'ensemble de carcasse enroulé soient distants circonférentiellement l'un de l'autre et qu'il existe un espace de séparation entre les deux bords d'extrémités circonférentielle de l'ensemble de carcasse enroulé lors de l'étape de formation de l'ensemble de travail enroulé, au moins dans la portion de l'ensemble de carcasse enroulé destinée à s'étendre axialement à l'aplomb radial de l'ensemble de travail enroulé.

Le procédé selon l'invention envisage trois alternatives utilisant toutes les trois les avantages conférées par la présence, lors de l'étape de déformation, de l'ensemble de travail enroulé en surplomb radial de la portion de l'ensemble de carcasse enroulé subissant le plus d'allongement circonférentiel. En effet, lors de l'étape de déformation, la portion axialement centrale de l'assemblage cylindrique va subir un taux de déformation largement supérieur au taux de déformation subi par les portions axiales latérales de cet assemblage cylindrique. Néanmoins, contrairement à l'état de la technique dans lequel la nappe de carcasse est déformée sans qu'aucune nappe de travail ne lui soit superposée, le procédé de l'invention prévoit que l'ensemble de carcasse enroulé soit radialement recouvert par l'ensemble de travail enroulé avant l'étape de déformation et ce, dans la portion axialement centrale subissant le taux de déformation le plus élevé. Ainsi, l'ensemble de travail enroulé reprend une grande partie des efforts circonférentiels s'exerçant sur l'assemblage formée par l'ensemble de carcasse enroulé et l'ensemble de travail enroulé. On évite alors que trop d'efforts circonférentiels ne soient repris par l'ensemble de carcasse enroulé, ce qui permet de réduire l'étendue circonférentielle de la jonction entre les bords d'extrémité circonférentielle, voire de supprimer la jonction.

Le taux de déformation est déterminé de façon connue par l'homme du métier en fonction du rapprochement axial des bords axiaux de l'ensemble de carcasse enroulé et de l'agrandissement radial de l'assemblage entre sa forme cylindrique et sa forme torique. La détermination des angles initiaux en fonction des angles finaux dépend, de façon connue de l'homme du métier, du taux de déformation comme cela est expliqué dans FR2797213 et FR1413102.

Dans la première alternative I, on forme une jonction par aboutement face à face sans superposition radiale des deux bords d'extrémité circonférentielle. Ainsi, on évite toute surépaisseur tout en formant une jonction entre les deux bords d'extrémité circonférentielle permettant d'assurer une continuité structurelle de l'ensemble de carcasse enroulé. Cette première alternative permet d'optimiser au maximum l'aspect des flancs et l'uniformité à haute vitesse.

Dans la deuxième alternative II, on forme une jonction par aboutement avec superposition radiale des deux bords d'extrémité circonférentielle, cette superposition radiale donnant lieu à la formation d'une jonction plus fragile, car circonférentiellement relativement peu étendue, que la jonction du procédé de l'état de la technique, qui elle est plus résistante car circonférentiellement relativement étendue. Ainsi, on évite, comme dans la première alternative, toute ouverture de la jonction et ce, même pour des procédés dans lesquels les taux de déformation sont relativement élevés et dans lesquels, du fait de la fragilité de la jonction, si on n'avait pas enroulé l'ensemble de travail enroulé préalablement à l'étape de déformation, on aurait provoqué, en mettant en oeuvre l'étape de déformation dans des conditions identiques, notamment en ce qui concerne le taux de déformation, l'ouverture de la jonction en raison d'efforts circonférentiels trop importants s'exerçant sur l'ensemble de carcasse enroulé. En d'autres termes, dans la deuxième alternative II, on forme l'ensemble de carcasse enroulé de façon à former une jonction entre les deux bords d'extrémité circonférentielle de l'ensemble de carcasse enroulé par recouvrement de façon à former une superposition radiale entre au moins un élément de renfort filaire de carcasse d'un des bords d'extrémité circonférentielle de l'ensemble de carcasse enroulé et au moins un élément de renfort filaire de carcasse de l'autre des bords d'extrémité circonférentielle de l'ensemble de carcasse enroulé, au moins dans la portion de l'ensemble de carcasse enroulé destinée à s'étendre axialement à l'aplomb radial de l'ensemble de travail enroulé, de sorte que, sans étape de formation de l'ensemble de travail enroulé préalablement à l'étape de déformation, une étape de déformation de l'ensemble de carcasse enroulé seul présentant un taux de déformation égal au taux de déformation de l'étape de déformation de l'assemblage de l'ensemble de carcasse enroulé et de l'ensemble de travail enroulé, entraînerait une ouverture de la jonction. Le taux de déformation correspond au taux d'expansion radial de l'assemblage pour passer de sa forme sensiblement cylindrique à sa forme sensiblement torique et est égal au rapport de la distance entre le point radialement le plus extérieur de l'assemblage et l'axe principal du support de fabrication après déformation sur la distance entre le point radialement le plus extérieur de l'assemblage et l'axe principal du support de fabrication avant déformation. En outre, cela permet de réduire significativement les contraintes sur le nombre d'éléments de renfort filaires devant être situées dans la jonction dans les cas où certaines performances du pneumatique requièrent une jonction par aboutement avec superposition radiale des deux bords d'extrémité circonférentielle.

Dans la deuxième alternative II, on peut ainsi mettre en oeuvre avantageusement le procédé selon l'invention dans le cas de procédés dans lesquels le bord d'extrémité circonférentielle radialement le plus extérieur de l'ensemble de carcasse enroulé recouvre le bord d'extrémité circonférentielle radialement le plus intérieur de l'ensemble de carcasse enroulé avec au plus 4 éléments de renfort filaires de carcasse, de préférence au plus 3 éléments de renfort filaires de carcasse et encore plus préférentiellement au plus 2 éléments de renfort filaires de carcasse au moins dans la portion de l'ensemble de carcasse enroulé destinée à s'étendre axialement à l'aplomb radial de l'ensemble de travail enroulé. Préférentiellement, le bord d'extrémité circonférentielle radialement le plus extérieur recouvre le bord d'extrémité circonférentielle radialement le plus intérieur avec au moins 1 élément de renfort filaire de carcasse au moins dans la portion axialement de l'ensemble de carcasse enroulé destinée à s'étendre axialement à l'aplomb radial de l'ensemble de travail enroulé de façon à limiter les conséquences sur certaines performances du pneumatique, notamment lors d'une utilisation dans des conditions d'usages très sévères.

Dans la troisième alternative III, on s'autorise une absence de jonction. En effet, l'ensemble de travail enroulé reprenant une grande partie des efforts circonférentiels lors de la déformation, on évite un écartement non maîtrisé entre les deux bords d'extrémité circonférentielle. Ainsi, on peut envisager une absence de jonction et une distance entre les deux bords d'extrémité circonférentielle jusqu'à un seuil que l'on aura prédéterminé en fonction des performances désirées, seuil dont on garantira que l'on ne le dépasse pas grâce au procédé selon l'invention. Conformément à l'invention, l'absence de jonction est telle que l'on forme l'ensemble de carcasse enroulé de sorte que :
- les deux bords d'extrémité circonférentielle de l'ensemble de carcasse enroulé soient distants circonférentiellement l'un de l'autre, et
- qu'il existe un espace de séparation entre les deux bords d'extrémités circonférentielle de l'ensemble de carcasse enroulé lors de l'étape de formation de l'ensemble de travail,
au moins dans la portion de l'ensemble de carcasse enroulé destinée à s'étendre axialement à l'aplomb radial de l'ensemble de travail enroulé.

Dans la troisième alternative III, on peut ainsi mettre en oeuvre avantageusement le procédé selon l'invention dans le cas de procédés dans lesquels les bords d'extrémité circonférentielles de l'ensemble de carcasse enroulé sont circonférentiellement distants d'une distance moyenne d'au plus 2,5 mm, de préférence d'au plus 2 mm et plus préférentiellement d'au plus 1 mm au moins dans la portion de l'ensemble de carcasse enroulé destinée à s'étendre axialement à l'aplomb radial de l'ensemble de travail enroulé de façon à limiter les conséquences sur certaines performances du pneumatique, notamment lors d'une utilisation dans des conditions d'usages très sévères. Par distance moyenne, on entend la moyenne de dix distances mesurées de façon équiréparties sur la largeur axiale de la portion de l'ensemble de carcasse enroulé destinée à s'étendre à l'aplomb radial de l'ensemble de travail enroulé.

Dans les première et deuxième alternatives, on assure, contrairement à la troisième alternative, une continuité structurelle de l'ensemble de carcasse enroulé permettant de maximiser l'uniformité de l'aspect et l'uniformité du pneumatique à haute vitesse. A l'issue de l'étape de déformation, les deux bords d'extrémité circonférentielle sont au contact l'un de l'autre dans la portion de l'ensemble de carcasse enroulé destinée à s'étendre axialement à l'aplomb radial de l'ensemble de travail enroulé en raison des faibles efforts qui s'exercent sur l'ensemble de carcasse enroulé. En d'autres termes, on évite l'ouverture de la jonction dans la portion de l'ensemble de carcasse enroulé destinée à s'étendre axialement à l'aplomb radial de l'ensemble de travail enroulé lors de l'étape de déformation.

Le procédé selon l'invention peut être mis en oeuvre en raison de l'agencement particulier de l'assemblage cylindrique dans lequel les angles initiaux formés avec la direction circonférentielle du support par les directions principales des éléments de renfort filaires de carcasse et de travail varient lors de l'étape de déformation pour atteindre leurs angles finaux, à l'exception de la portion enroulée de l'ensemble de carcasse enroulé autour des éléments de renfort circonférentiels dans laquelle la direction principale des éléments de renfort filaires de carcasse reste sensiblement identique par rapport à la direction circonférentielle du support et donc du pneumatique.

D'une part, ces angles finaux sont tels que la direction principale des éléments de renfort de carcasse forme dans chaque flanc, avec la direction circonférentielle du support et donc du pneumatique, un angle allant, en valeur absolue, de 80° à 90° conférant les propriétés d'un pneumatique radial classique. D'autre part, ces angles finaux sont tels que la direction principale des éléments de renfort de carcasse forment, à l'aplomb radial de l'ensemble de travail enroulé, avec la direction circonférentielle du support et donc du pneumatique, un angle, en valeur absolue, strictement inférieur à 80° et qui, combiné à l'angle final formé par la direction principale de chaque élément de renfort filaire de travail avec la direction circonférentielle du support et donc du pneumatique, en valeur absolue, strictement supérieur à 10°, permet de définir une triangulation qui, dans l'état de la technique, nécessite nécessairement la présence de deux couches de travail.

La présence d'un unique ensemble de travail enroulé destiné à former l'unique couche de travail permet notamment d'alléger le pneumatique, donc de réduire l'énergie dissipée par l'hystérèse du sommet et donc de réduire la résistance au roulement du pneumatique.

Conformément à l'invention, l'armature de travail comprend une unique couche de travail. Ainsi, l'armature de travail est, à l'exception de la couche de travail, dépourvue de toute couche renforcée par des éléments de renfort filaires. Les éléments de renfort filaires de telles couches renforcées exclues de l'armature de travail du pneumatique comprennent les éléments de renfort filaires métalliques et les éléments de renfort filaires textiles. De façon très préférentielle, l'armature de travail est constituée par l'unique couche de travail.

Conformément à l'invention, l'armature de carcasse comprend au moins une couche de carcasse.

Ainsi, dans un mode de réalisation, l'armature de carcasse comprend une unique couche de carcasse et est donc, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse. Dans un autre mode de réalisation, l'armature de carcasse comprend deux couches de carcasse.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble enroulé ou d'une couche ou d'une armature, on comprend une portion de l'assemblage, de la couche ou du pneumatique s'étendant axialement et comprise entre les plans radiaux passant par les bords axiaux de l'ensemble enroulé ou de la couche ou de l'armature.

Par portion d'un ensemble enroulé destinée à s'étendre axialement, portion d'un ensemble enroulé s'étendant axialement ou portion d'une couche s'étendant axialement à l'aplomb radial d'un ensemble de référence ou d'une couche de référence, on comprend une portion dudit ensemble ou de ladite couche comprise entre les projections radiale des bords axiaux de l'ensemble de référence ou de la couche de référence sur ledit ensemble ou ladite couche. Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Dans le pneumatique et lors du procédé, par orientation d'un angle, on entend le sens, horaire ou anti-horaire, dans lequel il faut tourner depuis la droite de référence, ici la direction circonférentielle du support ou du pneumatique, définissant l'angle pour atteindre la direction principale selon laquelle l'élément de renfort filaire considéré s'étend.

Lors du procédé, les angles considérés formés par les directions principales selon lesquelles s'étendent les éléments de renfort filaires de travail et de carcasse sont par convention des angles d'orientations opposées et l'angle formé par la direction principale selon laquelle s'étend chaque élément de renfort filaire de travail est, en valeur absolue, le plus petit des deux angles définis entre la droite de référence, ici la direction circonférentielle du support ou du pneumatique et la direction principale selon laquelle l'élément de renfort filaire de travail s'étend. Ainsi, l'angle formé par la direction principale selon laquelle s'étend chaque élément de renfort filaire de travail définit une orientation qui est opposée à celle formée par l'angle de la direction principale selon laquelle s'étend chaque élément de renfort filaire de carcasse. Dans un procédé simplifié dans lequel on n'a à manipuler qu'une nappe de carcasse pour former l'ensemble de carcasse enroulé et dans lequel on éviterait des jonctions circonférentielles entre plusieurs nappes de carcasse de largeurs axiales inférieures à la largeur axiale de l'ensemble de carcasse enroulé destiné à être formé, l'ensemble de carcasse enroulé est constituée de la nappe de carcasse qui est destinée à former la couche de carcasse. En d'autres termes, la nappe de carcasse est axialement continue.

Dans le cas où on forme le ou chaque ensemble de carcasse enroulé avec plusieurs nappes de carcasse, on utilisera préférentiellement plusieurs nappes de carcasse dans lesquelles les directions principales des éléments de renfort filaires de carcasse sont toutes parallèles les unes aux autres.

Dans le mode de réalisation dans lequel l'armature de carcasse comprend une unique couche de carcasse, on forme par enroulement d'une nappe de carcasse ou de plusieurs nappes de carcasse autour d'un support présentant une forme sensiblement cylindrique autour d'un axe principal, un ensemble de carcasse enroulé destiné à former la couche de carcasse.

Dans le mode de réalisation dans lequel l'armature de carcasse comprend deux couches de carcasse, on forme par enroulement d'une nappe de carcasse ou de plusieurs nappes de carcasse autour d'un support présentant une forme sensiblement cylindrique autour d'un axe principal, deux ensembles de carcasse enroulés destinés à former chacun chaque couche de carcasse. Dans ce mode de réalisation à deux couches de carcasse, lors de l'étape de formation de chaque ensemble de carcasse enroulé, on met en oeuvre l'une des alternatives I, II, III pour chaque ensemble de carcasse enroulé. Ainsi, on pourra préférentiellement mettre en oeuvre la même alternative I, II ou III pour les deux ensembles de carcasse enroulés. Alternativement, on pourra mettre en oeuvre des alternatives différentes pour chaque ensemble de carcasse enroulé.

De façon analogue, dans un procédé simplifié dans lequel on n'a à manipuler qu'une nappe de travail pour former l'ensemble de travail enroulé et dans lequel on éviterait des jonctions circonférentielles entre plusieurs nappes de travail de largeurs axiales inférieures à la largeur axiale de l'ensemble de travail enroulé destiné à être formé, l'ensemble de travail enroulé est constitué de la nappe de travail qui est destinée à former la couche de travail. En d'autres termes, la nappe de travail est axialement continue. Dans le cas où on forme l'ensemble de travail enroulé avec plusieurs nappes de travail, on utilisera préférentiellement plusieurs nappes de travail dans lesquelles les directions principales des éléments de renfort filaires de travail sont toutes parallèles les unes aux autres. Bien entendu, on pourra envisager des directions principales des éléments de renfort filaires de travail non parallèles les unes aux autres d'une nappe travail à l'autre.

Dans un mode de réalisation préféré, on préfère ne mettre en oeuvre que les première et deuxième alternatives. Ainsi, de préférence, lors de l'étape de formation de l'ensemble de carcasse enroulé, on met en oeuvre l'une des alternatives I ou II.

Dans un mode de réalisation encore plus préféré, on préfère ne mettre en oeuvre que la première alternative. Ainsi, très préférentiellement, lors de l'étape de formation de l'ensemble de carcasse enroulé, on met en oeuvre l'alternative I.

Quel que soit le mode de réalisation envisagé décrit précédemment, préférentiellement, on forme l'ensemble de carcasse enroulé de façon à former une jonction entre les deux bords d'extrémité circonférentielle de l'ensemble de carcasse enroulé par aboutement sans former de superposition entre un élément de renfort filaire de carcasse d'un des bords d'extrémité circonférentielle de l'ensemble de carcasse enroulé et un élément de renfort filaire de carcasse de l'autre des bords d'extrémité circonférentielle de l'ensemble de carcasse enroulé, et ce, sur l'ensemble de la largeur axiale de l'ensemble de carcasse enroulé entre les deux bords axiaux de l'ensemble de carcasse enroulé.

Quel que soit le mode de réalisation envisagé décrit précédemment, préférentiellement, on forme l'ensemble de carcasse enroulé de façon à former une jonction entre les deux bords d'extrémité circonférentielle de l'ensemble de carcasse enroulé par recouvrement de façon à former une superposition radiale entre au moins un élément de renfort filaire de carcasse d'un des bords d'extrémité circonférentielle de l'ensemble de carcasse enroulé et au moins un élément de renfort filaire de carcasse de l'autre des bords d'extrémité circonférentielle de l'ensemble de carcasse enroulé, de sorte que, sans étape de formation de l'ensemble de travail enroulé préalablement à l'étape de déformation, l'étape de déformation entraînerait une ouverture de la jonction, et ce, sur l'ensemble de la largeur axiale de l'ensemble de carcasse enroulé entre les deux bords axiaux de l'ensemble de carcasse enroulé.

Quel que soit le mode de réalisation envisagé décrit précédemment, préférentiellement, on forme l'ensemble de carcasse enroulé de sorte que les deux bords d'extrémité circonférentielle de l'ensemble de carcasse enroulé soient distants circonférentiellement l'un de l'autre et ce, sur l'ensemble de la largeur axiale de l'ensemble de carcasse enroulé entre les deux bords axiaux de l'ensemble de carcasse enroulé.

Ainsi, en mettant en oeuvre les jonctions ou l'absence de jonction sur l'ensemble de la largeur axiale de l'ensemble de carcasse enroulé entre les deux bords axiaux de l'ensemble de carcasse enroulé, on évite de différencier les jonctions et l'absence de jonction entre la portion de l'ensemble de carcasse enroulé destinée à s'étendre axialement à l'aplomb radial de l'ensemble de travail enroulé et les portions axiales de l'ensemble de carcasse enroulé destinées à s'étendre radialement dans chaque flanc. Ceci est d'autant plus avantageux que lors de l'étape de déformation, en raison d'une déformation radiale bien moindre de chaque portion de l'ensemble de carcasse enroulé destinées à s'étendre radialement dans chaque flanc par rapport à la portion de l'ensemble de carcasse enroulé destinée à s'étendre axialement à l'aplomb radial de l'ensemble de travail enroulé, les efforts circonférentiels dans chaque portion de l'ensemble de carcasse enroulé destinées à s'étendre radialement dans chaque flanc sont bien moindres que dans la portion de l'ensemble de carcasse enroulé destinée à s'étendre axialement à l'aplomb radial de l'ensemble de travail enroulé. Ainsi, la jonction ou l'absence de jonction est bien moins sollicitée dans chaque portion de l'ensemble de carcasse enroulé destinées à s'étendre radialement dans chaque flanc et les risques associés bien moindres. Enfin, en mettant en oeuvre la jonction ou l'absence de jonction sur l'ensemble de la largeur axiale de l'ensemble de carcasse enroulé, on améliore encore davantage l'aspect et l'uniformité à haute vitesse du pneumatique.

Dans des modes de réalisation dans lesquels la direction principale de chaque élément de renfort filaire de carcasse présente, entre les portions, des zones de transition où l'angle est sensiblement variable, la portion de l'ensemble de carcasse enroulé s'étendant axialement à l'aplomb radial de l'ensemble de travail enroulé et dans laquelle la direction principale de chaque élément de renfort filaire de carcasse forme, avec la direction circonférentielle du support un angle final, en valeur absolue, strictement inférieur à 80°, présente une largeur axiale égale à au moins 40%, de préférence au moins 50% de la largeur axiale de l'ensemble de travail enroulé.

Dans des modes de réalisation dans lesquels la direction principale de chaque élément de renfort filaire de carcasse présente, entre les portions, des zones de transition où l'angle est sensiblement variable, la portion de l'ensemble de carcasse enroulé s'étendant axialement à l'aplomb radial de l'ensemble de travail enroulé et dans laquelle la direction principale de chaque élément de renfort filaire de carcasse forme, avec la direction circonférentielle du support un angle final, en valeur absolue, strictement inférieur à 80°, présente une largeur axiale égale à au plus 90%, de préférence au plus 80% de la largeur axiale de l'ensemble de travail enroulé.

De préférence, le plan médian de l'assemblage coupe cette portion de l'ensemble de carcasse enroulé s'étendant axialement à l'aplomb radial de l'ensemble de travail enroulé. Plus préférentiellement, cette portion de l'ensemble de carcasse enroulé s'étendant axialement à l'aplomb radial de l'ensemble de travail enroulé est centrée axialement sur le plan médian de l'assemblage.

La largeur axiale de la portion de l'ensemble de carcasse enroulé dépend notamment du taux de déformation ainsi que des angles initiaux. L'homme du métier saura en faisant varier l'un et ou l'autre de ces paramètres, faire varier la largeur axiale de la portion de l'ensemble de carcasse enroulé concernée.

Dans des modes de réalisation dans lesquels la direction principale de chaque élément de renfort filaire de carcasse présente, entre les portions, des zones de transition où l'angle est sensiblement variable, chaque portion de l'ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au moins 5%, de préférence au moins 15% et encore plus préférentiellement au moins 30% de la hauteur radiale du pneumatique fabriqué.

Dans des modes de réalisation dans lesquels la direction principale de chaque élément de renfort filaire de carcasse présente, entre les portions, des zones de transition où l'angle est sensiblement variable, chaque portion de l'ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au plus 80%, de préférence au plus 70% et encore plus préférentiellement au plus 60% de la hauteur radiale du pneumatique fabriqué.

De préférence, le plan circonférentiel équatorial de l'assemblage coupe chaque portion de l'ensemble de carcasse enroulé destinée à être située dans chaque flanc.

De façon analogue, la hauteur radiale de la portion de l'ensemble de carcasse enroulé dépend notamment du taux de déformation ainsi que des angles initiaux. L'homme du métier saura en faisant varier l'un et ou l'autre de ces paramètres, faire varier hauteur radiale de chaque portion de l'ensemble de carcasse enroulé concernée.

Par plan médian de l'assemblage (noté m), on entend le plan perpendiculaire à l'axe principal du support qui est situé à mi-distance axiale entre chaque bord axial de l'assemblage.

Par plan circonférentiel équatorial de l'assemblage (noté e), on entend la surface cylindrique théorique passant par l'équateur de l'assemblage, perpendiculaire au plan médian et à la direction radiale. L'équateur de l'assemblage est, dans un plan de coupe méridienne (plan perpendiculaire à la direction circonférentielle et parallèle aux directions radiale et axiales) l'axe parallèle à l'axe principal du support et situé à équidistance entre le point radialement le plus externe de l'assemblage et le point radialement le plus interne de l'assemblage, la distance entre ces deux points étant égale à h.

On pourra avantageusement mettre en oeuvre l'invention en utilisant des couches de carcasse comprenant des éléments de renfort filaires de carcasse de taille relativement importante. L'utilisation d'éléments de renfort filaires de carcasse de taille relativement importante est rendue préférable dans le cas où on souhaite améliorer la résistance mécanique de l'armature de carcasse et où, pour arriver à une telle amélioration, l'augmentation du titre à matériau identique, et donc l'augmentation de la taille, est une solution simple et économique. En effet, dans le procédé et le pneumatique de l'état de la technique, du fait d'une jonction circonférentiellement relativement étendue, il est très préjudiciable d'utiliser des éléments de renfort filaires de carcasse de taille relativement importante qui amplifient la déformation des flancs comme cela est expliqué dans WO2019180352. Une solution à ce problème consiste à utiliser des éléments de renfort filaires de carcasse de taille plus petite et d'utiliser non pas une mais deux couches de carcasse, ce qui augmente le coût et le poids du pneumatique. Au contraire, grâce à des jonctions circonférentiellement relativement peu étendues voire inexistantes, l'invention permet l'utilisation d'éléments de renfort filaires de carcasse de taille relativement importante sans risquer d'engendrer une déformation des flancs.

En outre, dans chaque bourrelet du pneumatique, la portion enroulée comprend une portion axialement interne comprenant des éléments de renfort filaires de carcasse dont l'angle de la direction principale formé avec la direction circonférentielle, est en valeur absolue, sensiblement égal à l'angle de la direction principale formé avec la direction circonférentielle des éléments de renfort filaires de carcasse d'une portion axialement externe de la portion enroulée. Néanmoins, les orientations de ces angles sont opposées du fait de l'enroulement autour de l'élément de renfort circonférentiel, ce qui permet de réduire l'épaisseur axiale de la superposition de la portion axialement interne et de la portion axialement externe par rapport à une portion enroulée classique dans laquelle les angles présentent des valeurs absolues et des orientations identiques. En réduisant l'épaisseur axiale de la superposition, on réduit encore davantage le risque de voir une déformation.

Ainsi, de façon avantageuse, on pourra utiliser des éléments de renfort filaires de carcasse tels que:
- chaque élément de renfort filaire de carcasse comprend au moins un brin multifilamentaire en polyester et présente un titre total supérieur ou égal à 450 tex, de préférence supérieur ou égal à 500 tex, ou
- chaque élément de renfort filaire de carcasse comprend au moins un brin multifilamentaire en polyester et au moins un brin multifilamentaire en polyamide aromatique et présente un titre total supérieur ou égal à 350 tex, de préférence supérieur ou égal à 400 tex.

Dans un mode de réalisation très préférentiel, postérieurement à l'étape de déformation de l'assemblage, on agence, radialement à l'extérieur de l'assemblage de forme sensiblement torique, un ensemble de frettage enroulé destiné à former une armature de frettage, l'ensemble de frettage enroulé étant formé par enroulement hélicoïdal d'au moins un élément de renfort filaire de frettage ou d'une nappe de frettage obtenue par noyage d'un ou de plusieurs éléments de renfort filaires de frettage dans une matrice élastomérique, de façon à s'étendre axialement d'un bord axial à l'autre bord axial de l'ensemble de frettage enroulé.

Avantageusement, le ou chaque élément de renfort filaire de frettage s'étendant selon une direction principale du ou de chaque élément de renfort filaire de frettage, l'angle formé par la direction principale du ou de chaque élément de renfort filaire de frettage avec la direction circonférentielle du support est, en valeur absolue, inférieur ou égal à 10°, de préférence inférieur ou égal à 7° et plus préférentiellement inférieur ou égal à 5°.

Dans des modes de réalisation préférés permettant d'obtenir une triangulation efficace, la direction principale du ou de chaque élément de renfort filaire de frettage, la direction principale de chaque élément de renfort filaire de travail et la direction principale de chaque élément de renfort filaire de carcasse forment, avec la direction circonférentielle du support, dans une portion de l'assemblage et de l'ensemble de frettage enroulé comprise axialement entre les bords axiaux de l'ensemble enroulé axialement le moins large parmi l'ensemble de travail enroulé et l'ensemble de frettage enroulé, des angles deux à deux différents en valeur absolue.

La portion de l'assemblage et de l'ensemble de frettage enroulé comprise axialement entre les bords axiaux de l'ensemble enroulé axialement le moins large parmi l'ensemble de travail enroulé et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au moins 40%, de préférence au moins 50% de la largeur axiale de l'ensemble de travail enroulé.

La portion de l'assemblage et de l'ensemble de frettage enroulé comprise axialement entre les bords axiaux de l'ensemble enroulé axialement le moins large parmi l'ensemble de travail enroulé et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au plus 90%, de préférence au plus 80% de la largeur axiale de l'ensemble de travail enroulé.

De préférence, le plan médian de l'assemblage coupe cette portion de l'assemblage et de l'ensemble de frettage enroulé comprise axialement entre les bords axiaux de l'ensemble enroulé axialement le moins large parmi l'ensemble de travail enroulé et l'ensemble de frettage enroulé. Plus préférentiellement, cette portion de l'assemblage et de l'ensemble de frettage enroulé comprise axialement entre les bords axiaux de l'ensemble enroulé axialement le moins large parmi l'ensemble de travail enroulé et l'ensemble de frettage enroulé est centrée axialement sur le plan médian de l'assemblage.

Afin d'obtenir, à l'issue de l'étape de déformation des angles finaux permettant un compromis préférentiel de performances du pneumatique, on a avantageusement:
- l'angle initial formé par la direction principale de chaque élément de renfort filaire de travail avec la direction circonférentielle du support est, en valeur absolue, strictement supérieur à 0°, de préférence va de 4° à 60° et plus préférentiellement va de 16° à 47°,
- l'angle initial formé par la direction principale de chaque élément de renfort filaire de carcasse avec la direction circonférentielle du support est, en valeur absolue, strictement supérieur à 0°, de préférence va de 27° à 150° et plus préférentiellement va de 56° à 123°.

Un tel compromis préférentiel de performances du pneumatique est obtenu lorsqu'on a :
- l'angle final formé par la direction principale de chaque élément de renfort filaire de travail avec la direction circonférentielle du support va, en valeur absolue, de 15° à 50°, de préférence de 18° à 30°,
- l'angle final formé par la direction principale de chaque élément de renfort filaire de carcasse avec la direction circonférentielle du support est, en valeur absolue, supérieur ou égal à 10°, de préférence va de 20° à 75° et plus préférentiellement va de 35 à 70°, dans la portion de l'ensemble de carcasse enroulé s'étendant axialement à l'aplomb radial de l'ensemble de travail enroulé.

Dans certains modes de réalisation, l'angle final formé par la direction principale de chaque élément de renfort filaire de travail avec la direction circonférentielle du support est sensiblement égal à l'angle formé par la direction principale de chaque élément de renfort filaire de travail de la couche de travail avec la direction circonférentielle du pneumatique une fois ce dernier fabriqué. De façon analogue, dans ces mêmes modes de réalisation, l'angle final formé par la direction principale de chaque élément de renfort filaire de carcasse avec la direction circonférentielle du support dans la portion de l'ensemble de carcasse enroulé s'étendant axialement à l'aplomb radial de l'ensemble de travail enroulé est sensiblement égal à l'angle formé par la direction principale de chaque élément de renfort filaire de carcasse de la couche de carcasse avec la direction circonférentielle du pneumatique dans la portion de la couche de carcasse s'étendant axialement à l'aplomb radial de la couche de travail une fois le pneumatique fabriqué.

Dans d'autres modes de réalisation, une légère diminution des angles finaux peut intervenir lors de l'étape de moulage de l'ébauche crue dans un moule durant laquelle l'ébauche crue est plaquée contre des surfaces de moulage du moule et subit une déformation radiale de moulage non négligeable par rapport à la déformation subie lors de l'étape de déformation pour faire passer l'assemblage de l'ensemble de carcasse enroulé et de l'ensemble de travail enroulé de la forme sensiblement cylindrique à la forme sensiblement torique.

Dans un mode de réalisation permettant d'ancrer facilement l'armature de carcasse dans chaque bourrelet, postérieurement à l'étape de formation de l'ensemble de carcasse enroulé :
- on agence deux éléments de renfort circonférentiels autour de l'ensemble de carcasse enroulé,
- on retourne axialement vers l'intérieur chaque bord axial de l'ensemble de carcasse enroulé de façon à recouvrir radialement chaque élément de renfort circonférentiel par un des bords axiaux de l'ensemble de carcasse enroulé et à former une portion de l'ensemble de carcasse enroulé enroulée autour de chaque élément de renfort circonférentiel,
- on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support, un angle final de chaque élément de renfort filaire de carcasse, en valeur absolue, strictement inférieur à 80°, dans la portion enroulée de l'ensemble de carcasse enroulé.

Dans ce mode de réalisation préférentiel, l'angle final formé par la direction principale de chaque élément de renfort filaire de carcasse, avec la direction circonférentielle du support, dans la portion enroulée de l'ensemble de carcasse enroulé, est sensiblement identique à l'angle initial formé par la direction principale de chaque élément de renfort filaire de carcasse avant l'étape de déformation du fait de l'ancrage de cette portion autour de l'élément de renfort circonférentiel.

Un autre objet de l'invention est un pneumatique obtenu par le procédé défini ci-dessus. Comme indiqué ci-dessus, un pneumatique selon l'invention présente un aspect et une uniformité à haute vitesse améliorés.

Les pneumatiques de l'invention sont préférentiellement destinés à des véhicules de tourisme. Un tel pneumatique présente une section dans un plan de coupe méridien caractérisée par une largeur de section S et une hauteur de section H, au sens de la norme de la European Tyre and Rim Technical Organisation ou « ETRTO », telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Par direction axiale, on entend la direction sensiblement parallèle à l'axe principal du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend la surface cylindrique théorique passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Dans le cas où on a mis en oeuvre la première alternative I, la couche de carcasse s'étend circonférentiellement en formant une jonction par aboutement face à face entre les bords d'extrémité circonférentielle de la couche de carcasse sans former de superposition radiale entre un élément de renfort filaire de carcasse d'un des bords d'extrémité circonférentielle et un élément de renfort filaire de carcasse de l'autre des bords d'extrémité circonférentielle, et ce, au moins dans la portion de la couche de carcasse s'étendant axialement à l'aplomb radial de la couche de travail.

Dans le cas où on a mis en oeuvre la deuxième alternative II, la couche de carcasse s'étend circonférentiellement en formant une jonction par recouvrement de façon à former une superposition radiale entre au moins un élément de renfort filaire de carcasse d'un des bords d'extrémité circonférentielle et au moins un élément de renfort filaire de carcasse de l'autre des bords d'extrémité circonférentielle au moins dans la portion de la couche de carcasse s'étendant axialement à l'aplomb radial de la couche de travail. Dans la deuxième alternative, on peut ainsi obtenir un pneumatique dans lequel le bord d'extrémité circonférentielle radialement le plus extérieur de la couche de carcasse recouvre le bord d'extrémité circonférentielle radialement le plus intérieur de la couche de carcasse avec au plus 4 éléments de renfort filaires de carcasse, de préférence au plus 3 éléments de renfort filaires de carcasse et encore plus préférentiellement au plus 2 éléments de renfort filaires de carcasse, et ce, au moins dans la portion de la couche de carcasse s'étendant axialement à l'aplomb radial de la couche de travail. Préférentiellement, le bord d'extrémité circonférentielle radialement le plus extérieur de la couche de carcasse recouvre le bord d'extrémité circonférentielle radialement le plus intérieur de la couche de carcasse avec au moins 1 élément de renfort filaire de carcasse au moins dans la portion de la couche de carcasse s'étendant axialement à l'aplomb radial de la couche de travail pour les mêmes raisons que celles évoquées pour le procédé. Par distance moyenne, on entend la moyenne de dix distances mesurées de façon équiréparties sur la largeur axiale de la portion de la couche de carcasse destinée à s'étendre à l'aplomb radial de la couche de travail.

Dans le cas où on a mis en oeuvre la troisième alternative III, les deux bords d'extrémité circonférentielle sont distants circonférentiellement l'un de l'autre au moins dans la portion de la couche de carcasse s'étendant axialement à l'aplomb radial de la couche de travail. Dans la troisième alternative, on peut ainsi obtenir un pneumatique dans lequel les bords d'extrémité circonférentielles de la couche de carcasse sont circonférentiellement distants d'une distance moyenne d'au plus 2,5 mm, de préférence d'au plus 2 mm et plus préférentiellement d'au plus 1 mm au moins, et ce, dans la portion de la couche de carcasse s'étendant axialement à l'aplomb radial de la couche de travail pour les mêmes raisons que celles évoquées pour le procédé.

Quel que soit le mode de réalisation du procédé envisagé décrit précédemment, préférentiellement, lorsqu'on met en oeuvre la première alternative I, la couche de carcasse s'étend circonférentiellement en formant une jonction par aboutement face à face entre les bords d'extrémité circonférentielle de la couche de carcasse sans former de superposition radiale entre un élément de renfort filaire de carcasse d'un des bords d'extrémité circonférentielle et un élément de renfort filaire de carcasse de l'autre des bords d'extrémité circonférentielle, et ce, sur l'ensemble de la largeur axiale de la couche de carcasse entre les deux bords axiaux de la couche de carcasse.

Quel que soit le mode de réalisation du procédé envisagé décrit précédemment, préférentiellement, lorsqu'on met en oeuvre la deuxième alternative II, la couche de carcasse s'étend circonférentiellement en formant une jonction par recouvrement de façon à former une superposition radiale entre au moins un élément de renfort filaire de carcasse d'un des bords d'extrémité circonférentielle et au moins un élément de renfort filaire de carcasse de l'autre des bords d'extrémité circonférentielle, et ce, sur l'ensemble de la largeur axiale de la couche de carcasse entre les deux bords axiaux de la couche de carcasse. Dans la deuxième alternative, on peut ainsi obtenir un pneumatique dans lequel le bord d'extrémité circonférentielle radialement le plus extérieur de la couche de carcasse recouvre le bord d'extrémité circonférentielle radialement le plus intérieur de la couche de carcasse avec au plus 4 éléments de renfort filaires de carcasse, de préférence au plus 3 éléments de renfort filaires de carcasse et encore plus préférentiellement au plus 2 éléments de renfort filaires de carcasse, et ce, sur l'ensemble de la largeur axiale de la couche de carcasse entre les deux bords axiaux de la couche de carcasse. Préférentiellement, le bord d'extrémité circonférentielle radialement le plus extérieur de la couche de carcasse recouvre le bord d'extrémité circonférentielle radialement le plus intérieur de la couche de carcasse avec au moins 1 élément de renfort filaire de carcasse, et ce, sur l'ensemble de la largeur axiale de la couche de carcasse entre les deux bords axiaux de la couche de carcasse.

Quel que soit le mode de réalisation du procédé envisagé décrit précédemment, préférentiellement, lorsqu'on met en oeuvre la troisième alternative III, la couche de carcasse présente deux bords d'extrémité circonférentielle, les deux bords d'extrémité circonférentielle étant distants circonférentiellement l'un de l'autre, et ce, sur l'ensemble de la largeur axiale de la couche de carcasse entre les deux bords axiaux de la couche de carcasse. Dans la troisième alternative, on peut ainsi obtenir un pneumatique dans lequel les bords d'extrémité circonférentielles de la couche de carcasse sont circonférentiellement distants d'une distance moyenne d'au plus 2,5 mm, de préférence d'au plus 2 mm et plus préférentiellement d'au plus 1 mm, et ce, sur l'ensemble de la largeur axiale de la couche de carcasse entre les deux bords axiaux de la couche de carcasse.

Dans un mode de réalisation :
- la couche de travail est délimitée axialement par deux bords axiaux de la couche de travail et comprend les éléments de renfort filaires de travail s'étendant axialement d'un bord axial à l'autre bord axial de la couche de travail les uns sensiblement parallèlement aux autres selon une direction principale de chaque élément de renfort filaire de travail formant, avec la direction circonférentielle du pneumatique, un angle, en valeur absolue, strictement supérieur à 10°,
- la couche de carcasse est délimitée axialement par deux bords axiaux de la couche de carcasse et comprend les éléments de renfort filaires de carcasse s'étendant axialement d'un bord axial à l'autre bord axial de la couche de carcasse, chaque élément de renfort filaire de carcasse s'étendant selon une direction principale de chaque élément de renfort filaire de carcasse formant, avec la direction circonférentielle du pneumatique:
   - un angle, en valeur absolue, strictement inférieur à 80° dans une portion de la couche de carcasse s'étendant axialement à l'aplomb radial de la couche de travail,
   - un angle allant, en valeur absolue, de 80° à 90° dans au moins une portion de la couche de carcasse s'étendant radialement dans chaque flanc.

Dans des modes de réalisation dans lesquels la direction principale de chaque élément de renfort filaire de carcasse présente, entre les portions, des zones de transition où l'angle est sensiblement variable, la portion de la couche de carcasse s'étendant axialement à l'aplomb de la couche de travail et dans laquelle la direction principale de chaque élément de renfort filaire de carcasse forme, avec la direction circonférentielle du pneumatique, un angle, en valeur absolue, strictement inférieur à 80° présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion de la couche de carcasse s'étendant axialement à l'aplomb de la couche de travail et dans laquelle la direction principale de chaque élément de renfort filaire de carcasse forme, avec la direction circonférentielle du pneumatique, un angle, en valeur absolue, strictement inférieur à 80° présente une largeur axiale égale à au plus 90%, de préférence au plus 80% de la largeur axiale de la couche de travail.

De préférence, le plan médian du pneumatique coupe cette portion de la couche de carcasse s'étendant axialement à l'aplomb de la couche de travail. Plus préférentiellement, cette portion de la couche de carcasse s'étendant axialement à l'aplomb de la couche de travail est centrée axialement sur le plan médian du pneumatique.

Dans des modes de réalisation dans lesquels la direction principale de chaque élément de renfort filaire de carcasse présente, entre les portions, des zones de transition où l'angle est sensiblement variable, chaque portion de la couche de carcasse s'étendant radialement dans chaque flanc et dans laquelle la direction principale de chaque élément de renfort filaire de carcasse forme, avec la direction circonférentielle du pneumatique, un angle allant, en valeur absolue, de 80° à 90° présente une hauteur radiale égale à au moins 5%, de préférence au moins 15% et plus préférentiellement au moins 30% de la hauteur radiale du pneumatique.

Dans des modes de réalisation dans lesquels la direction principale de chaque élément de renfort filaire de carcasse présente, entre les portions, des zones de transition où l'angle est sensiblement variable, chaque portion de la couche de carcasse s'étendant radialement dans chaque flanc et dans laquelle la direction principale de chaque élément de renfort filaire de carcasse forme, avec la direction circonférentielle du pneumatique, un angle allant, en valeur absolue, de 80° à 90° une hauteur radiale égale à au plus 80%, de préférence au plus 70% et plus préférentiellement au plus 60% de la hauteur radiale du pneumatique.

De préférence, le plan circonférentiel équatorial du pneumatique coupe chacune de ces portions de la couche de carcasse située dans chaque flanc.

Ainsi, afin d'améliorer les performances du pneumatique, notamment en rigidité de dérive et à haute vitesse, un mode de réalisation très avantageux prévoit que l'armature de sommet comprend une armature de frettage agencée radialement à l'extérieur de l'armature de travail, l'armature de frettage étant délimitée axialement par deux bords axiaux de l'armature de frettage et comprenant au moins un élément de renfort filaire de frettage enroulé circonférentiellement hélicoïdalement de façon à s'étendre axialement d'un bord axial à l'autre bord axial de l'armature de frettage selon une direction principale du ou de chaque élément de renfort filaire de frettage.

L'armature de frettage est ainsi radialement intercalée entre l'armature de travail et la bande de roulement.

Des éléments de renfort filaires de frettage convenant pour mettre en oeuvre le procédé selon l'invention sont notamment décrits dans les documents WO2016166056, WO2016166057, WO2019122620, WO2016091809, WO2016091810, WO2016091811 et WO2016091812.

Avantageusement, la direction principale du ou de chaque élément de renfort filaire de frettage forme, avec la direction circonférentielle du pneumatique, un angle, en valeur absolue, inférieur ou égal à 10°, de préférence inférieur ou égal à 7° et plus préférentiellement inférieur ou égal à 5°.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation avantageux, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort filaires. Les éléments de renfort filaires de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'armature de frettage et la couche de travail sont avantageusement agencées directement radialement au contact l'une de l'autre.

Par directement radialement au contact, on comprend que les objets considérés directement radialement au contact l'un de l'autre, ici les couches, armatures ou la bande de roulement, ne sont séparés radialement par aucun objet, par exemple par aucune couche, armature ni bande qui serait interposé radialement entre les objets considérés directement radialement au contact l'un de l'autre.

De façon à garantir préférentiellement une triangulation efficace du sommet du pneumatique, la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche ou de l'armature axialement la moins large parmi la couche de travail et l'armature de frettage, des angles deux à deux différents en valeur absolue. On parle également de maillage triangulaire formé par les éléments de renfort filaires de frettage, de travail et de carcasse.

En d'autres termes, le ou chaque élément de renfort filaire de frettage s'étendant selon une direction principale de frettage, chaque élément de renfort filaire de travail s'étendant selon une direction principale de travail, chaque élément de renfort filaire de carcasse s'étendant selon une direction principale de carcasse, ces directions de frettage, de travail et de carcasse sont deux à deux différentes dans la portion du pneumatique délimitée axialement par les bords axiaux de la couche ou de l'armature axialement la moins large parmi la couche de travail et l'armature de frettage.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au plus 90%, de préférence au plus 80% de la largeur axiale de la couche de travail.

De préférence, le plan médian du pneumatique coupe cette portion du pneumatique comprise axialement entre les bords axiaux de la couche ou de l'armature axialement la moins large parmi la couche de travail et l'armature de frettage. Plus préférentiellement, cette portion du pneumatique comprise axialement entre les bords axiaux de la couche ou de l'armature axialement la moins large parmi la couche de travail et l'armature de frettage est centrée axialement sur le plan médian du pneumatique.

Afin d'améliorer encore davantage la triangulation du sommet du pneumatique, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche de travail, des angles d'orientations opposées.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au plus 90%, de préférence au plus 80% de la largeur axiale de la couche de travail.

De préférence, le plan médian du pneumatique coupe cette portion du pneumatique comprise axialement entre les bords axiaux de la couche de travail. Plus préférentiellement, cette portion du pneumatique comprise axialement entre les bords axiaux de la couche de travail est centrée axialement sur le plan médian du pneumatique.

Un compromis préférentiel de performances du pneumatique est obtenu lorsque :
- la direction principale de chaque élément de renfort filaire de travail forme, avec la direction circonférentielle du pneumatique, un angle allant, en valeur absolue, de 15° à 50°, de préférence de 18° à 30°,
- la direction principale de chaque élément de renfort filaire de carcasse forme, avec la direction circonférentielle du pneumatique, un angle, en valeur absolue, supérieur ou égal à 10°, de préférence allant de 20° à 75° et plus préférentiellement va de 35° à 70°, dans la portion de la couche de carcasse s'étendant axialement à l'aplomb radial de la couche de travail.

Dans un mode de réalisation permettant d'ancrer facilement l'armature de carcasse dans chaque bourrelet, chaque bourrelet comprend au moins un élément de renfort circonférentiel, la couche de carcasse comprenant une portion de la couche de carcasse enroulée autour de chaque élément de renfort circonférentiel, la direction principale de chaque élément de renfort filaire de carcasse forme, avec la direction circonférentielle du pneumatique, un angle de chaque élément de renfort filaire de carcasse, en valeur absolue, strictement supérieur à 0°, de préférence allant de 27° à 150° et plus préférentiellement allant de 56° à 123°, dans la portion enroulée de la couche de carcasse.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Avantageusement, chaque élément de renfort filaire de travail est métallique. Par élément filaire métallique, on entend par définition un élément filaire formé d'un ou d'un assemblage de plusieurs monofilaments élémentaires constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée. Le ou l'assemblage de plusieurs monofilaments élémentaires peut être revêtu d'un matériau polymérique, par exemple comme cela est décrit dans US20160167438.

L'invention ainsi que ses avantages seront aisément compris à la lumière de la description détaillée et des exemples de réalisation non limitatifs qui suivent, ainsi que des figures 1 à 19 relatives à ces exemples dans lesquels :
- la figure 1 est une vue en coupe dans un plan de coupe méridien d'un pneumatique selon l'invention;
- la figure 2 est une vue schématique en arraché du pneumatique de la figure 1 illustrant l'agencement des éléments de renfort filaires à l'aplomb radial et en surplomb radial de la couche de travail;
- la figure 3 est une vue schématique des éléments de renfort filaires de carcasse agencés dans le flanc du pneumatique de la figure 1,
- la figure 4 est une vue dans un plan de coupe perpendiculaire à la direction axiale d'une portion du sommet du pneumatique de la figure 1;
- les figures 5 à 13 illustrent les différentes étapes d'un procédé selon une premier mode de réalisation de l'invention permettant de fabriquer le pneumatique de la figure 1;
- les figures 14 à 16 illustrent des étapes d'un procédé selon un deuxième mode de réalisation de l'invention analogues à celles illustrées par les figures 4 à 6; et
- les figures 17 à 19 illustrent des étapes d'un procédé selon un troisième mode de réalisation de l'invention analogues à celles illustrées par les figures 4 à 6.

Dans les figures relatives au pneumatique, on a représenté un repère X, Y, Z correspondant aux directions habituelles respectivement axiale (X), radiale (Y) et circonférentielle (Z) d'un pneumatique. Dans les figures relatives au procédé, on a représenté un repère x, y, z correspondant aux directions habituelles respectivement axiale (x), radiale (y) et circonférentielle (z) d'un support de fabrication déformable entre une forme sensiblement cylindrique et une forme torique autour de l'axe x.

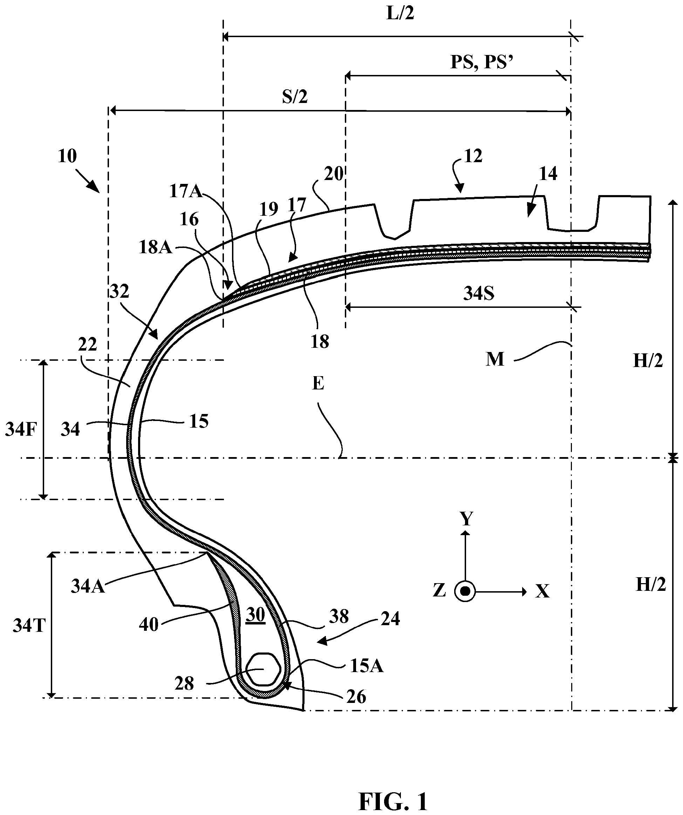

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme et présente des dimensions 245/45R18.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle Z. Le pneumatique 10 comprend également une couche d'étanchéité 15 à un gaz de gonflage étant destiné à délimiter une cavité interne fermée avec un support de montage du pneumatique 10 une une fois le pneumatique 10 monté sur le support de montage, par exemple une jante. La couche d'étanchéité 15 est à base de butyl.

L'armature de sommet 14 comprend une armature de travail 16 comprenant une couche de travail 18 et une armature de frettage 17 comprenant une unique couche de frettage 19. Ici, l'armature de travail 16 comprend une unique couche de travail 18 et est, en l'espèce, constituée de l'unique couche de travail 18. Dans ce qui suit, on parlera, par soucis de simplification de la couche de travail 18 sans rappeler à chaque fois que cette couche est unique. L'armature de frettage 17 est constituée de la couche de frettage 19.

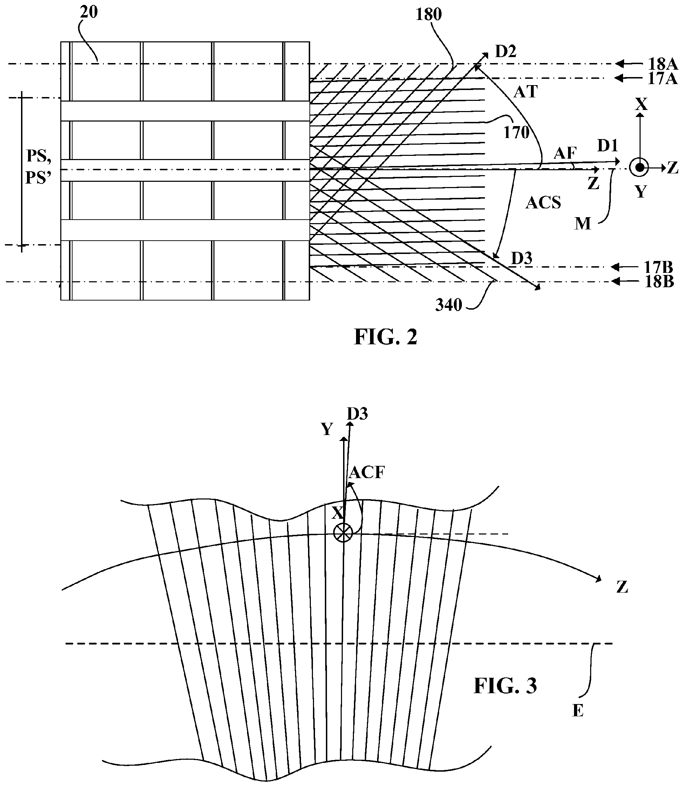

L'armature de sommet 14 est surmontée radialement de la bande de roulement 20. Ici, l'armature de frettage 17, ici la couche de frettage 19, est agencée radialement à l'extérieur de l'armature de travail 16 et est donc radialement intercalée entre l'armature de travail 16 et la bande de roulement 20. Dans le mode de réalisation illustré à la figure 2, l'armature de frettage 17 présente une largeur axiale plus petite que la largeur axiale de la couche de travail 18. Ainsi, l'armature de frettage est axialement la moins large de la couche de travail 18 et de l'armature de frettage 17.

Le pneumatique 10 comprend deux flancs 22 prolongeant le sommet 12 radialement vers l'intérieur. Le pneumatique 10 comporte en outre deux bourrelets 24 radialement intérieurs aux flancs 22. Chaque flanc 22 relie chaque bourrelet 24 au sommet 12.

Chaque bourrelet 24 comprend au moins un élément de renfort circonférentiel 26, en l'occurrence une tringle 28 surmontée radialement d'une masse de gomme 30 de bourrage.

Le pneumatique 10 comprend une armature 32 de carcasse ancrée dans chaque bourrelet 24. L'armature 32 de carcasse s'étend dans chaque flanc 22 et radialement intérieurement au sommet 12. L'armature de sommet 14 est agencée radialement entre la bande de roulement 20 et l'armature de carcasse 32.

L'armature de carcasse 32 comprend une couche de carcasse 34. Ici, l'armature de carcasse 32 comprend une au moins une couche de carcasse 34, et en l'espèce comprend une unique couche de carcasse 34 et ici est constituée de l'unique couche de carcasse 34.

La couche de carcasse 34 comprend une portion 34T de la couche de carcasse 34 enroulée autour de chaque élément de renfort circonférentiel 26 de manière à former dans chaque bourrelet 24 une portion 38 axialement intérieure et une portion axialement extérieure 40. La masse de gomme 30 de bourrage est intercalée entre les portions 38, 40 axialement intérieure et extérieure. D'autres modes d'ancrage de la couche de carcasse 34 sont possibles, par exemple comme décrit dans US5702548.

Chaque couche de travail 18, de frettage 19 et de carcasse 34 comprend une matrice élastomérique dans laquelle sont noyés un ou des éléments de renfort filaires de la couche correspondante. On va maintenant décrit ces couches en référence aux figures 1 à 3.

L'armature de frettage 17, ici la couche de frettage 19, est délimitée axialement par deux bords axiaux 17A, 17B de l'armature de frettage 17. L'armature de frettage 17 comprend plusieurs éléments de renfort filaires de frettage 170 enroulés circonférentiellement hélicoïdalement de façon à s'étendre axialement du bord axial 17A à l'autre bord axial 17B de l'armature de frettage 17 selon une direction principale D1 de chaque élément de renfort filaire de frettage 170. La direction principale D1 forme, avec la direction circonférentielle Z du pneumatique 10, un angle AF, en valeur absolue, inférieur ou égal à 10°, de préférence inférieur ou égal à 7° et plus préférentiellement inférieur ou égal à 5°. Ici, AF=5°.

La couche de travail 18 est délimitée axialement par deux bords axiaux 18A, 18B de la couche de travail 18. La couche de travail 18 comprend des éléments de renfort filaires de travail 180 s'étendant axialement du bord axial 18A à l'autre bord axial 18B de la couche de travail 18 les uns sensiblement parallèlement aux autres. Chaque élément de renfort filaire de travail 180 s'étend selon une direction principale D2 de chaque élément de renfort filaire de travail 180. La direction D2 forme, avec la direction circonférentielle Z du pneumatique 10, un angle AT, en valeur absolue, strictement supérieur à 10°, de préférence allant de 15° à 50° et plus préférentiellement allant de 18° à 30°. Ici, AT=24°.

La couche de carcasse 34 est délimitée axialement par deux bords axiaux 34A, 34B de la couche de carcasse 34. La couche de carcasse 34 comprend des éléments de renfort filaires de carcasse 340 s'étendant axialement du bord axial 34A à l'autre bord axial 34B de la couche de carcasse 34.

Chaque élément de renfort filaire de carcasse 340 s'étend selon une direction principale D3 de chaque élément de renfort filaire de carcasse 340 formant, avec la direction circonférentielle Z du pneumatique 10 un angle ACS, en valeur absolue, strictement inférieur à 80° dans une portion 34S de la couche de carcasse 34 s'étendant axialement à l'aplomb radial de la couche de travail 18. Avantageusement, dans cette portion 34S de la couche de carcasse 34 s'étendant axialement à l'aplomb radial de la couche de travail 18, la direction principale D3 de chaque élément de renfort filaire de carcasse 340 forme, avec la direction circonférentielle Z du pneumatique 10, un angle ACS, en valeur absolue, supérieur ou égal à 10°, de préférence allant de 20° à 75° et plus préférentiellement allant de 35° à 70°. Ici, ACS=43°.

La portion 34S de la couche de carcasse 34 s'étendant axialement à l'aplomb de la couche de travail 18 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de de la couche de travail 18. Le plan médian M du pneumatique 10 coupe cette portion 34S. Plus préférentiellement, cette portion 34S est centrée axialement sur le plan médian M du pneumatique 10.

Comme illustré sur les figures 1 et 3, la direction principale D3 de chaque élément de renfort filaire de carcasse 340 forme, avec la direction circonférentielle Z du pneumatique 10, un angle ACF allant, en valeur absolue, de 80° à 90° dans au moins une portion 34F de la couche de carcasse 34 s'étendant radialement dans chaque flanc 22. Ici, ACF=90°.

Chaque portion 34F de la couche de carcasse 34 s'étendant radialement dans chaque flanc 22 présente une hauteur radiale égale à au moins 5%, de préférence au moins 15% et plus préférentiellement au moins 30% de la hauteur radiale H du pneumatique 10 et égale à au plus 80%, de préférence au plus 70% et plus préférentiellement au plus 60% de la hauteur radiale H du pneumatique 10 et en l'espèce égale à 41% de la hauteur radiale H du pneumatique 10. Le plan circonférentiel équatorial E du pneumatique 10 coupe chaque portion 34F de la couche de carcasse 34 située dans chaque flanc 22.

La direction principale D3 de chaque élément de renfort filaire de carcasse 340 forme, avec la direction circonférentielle Z du pneumatique 10, un angle ACT, en valeur absolue, strictement supérieur à 0°, de préférence allant de 27° à 150° et plus préférentiellement allant de 56° à 123°, dans la portion enroulée 34T de la couche de carcasse 34.

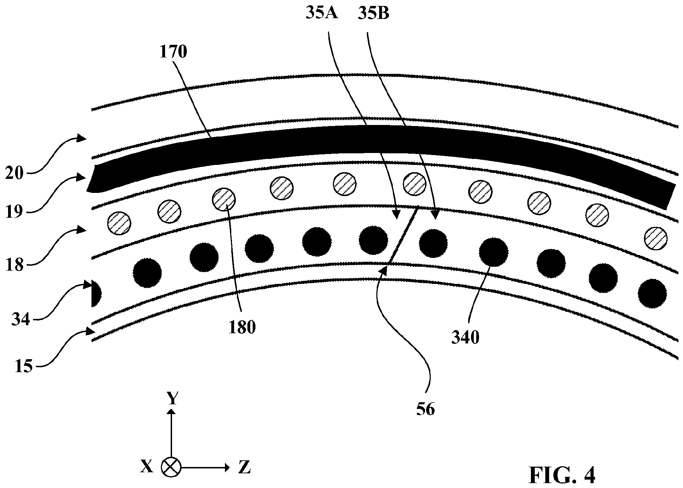

En référence à la figure 4, la couche de carcasse 34 présente deux bords d'extrémité circonférentielle 35A, 35B se faisant face et étant au contact l'un de l'autre. Dans ce premier mode de réalisation, la couche de carcasse 34 s'étend circonférentiellement en formant une jonction 56 par aboutement face à face entre les bords d'extrémité circonférentielle 35A, 35B de la couche de carcasse 34 sans former de superposition radiale entre un élément de renfort filaire de carcasse 340 d'un des bords d'extrémité circonférentielle 35A, 35B et un élément de renfort filaire de carcasse 340 de l'autre des bords d'extrémité circonférentielle 35A, 35B au moins dans la portion 34S de la couche de carcasse 34 s'étendant axialement à l'aplomb radial de la couche de travail 18. En l'espèce, la jonction 56 par aboutement face à face entre les bords d'extrémité circonférentielle 35A, 35B de la couche de carcasse 34 sans former de superposition radiale entre un élément de renfort filaire de carcasse 340 d'un des bords d'extrémité circonférentielle 35A, 35B et un élément de renfort filaire de carcasse 340 de l'autre des bords d'extrémité circonférentielle 35A, 35B est présente sur l'ensemble de la largeur axiale de la couche de carcasse 34 entre les deux bords axiaux 34A, 34B de la couche de carcasse 34.

Ainsi, comme illustré sur la figure 2, la direction principale D1 de chaque élément de renfort filaire de frettage 170, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS' du pneumatique 10 comprise axialement entre les bords axiaux 17A, 17B de l'armature de frettage 17, des angles deux à deux différents en valeur absolue. En outre, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS du pneumatique 10 comprise axialement entre les bords axiaux 18A, 18B de la couche de travail 18, des angles AT et ACS d'orientations opposées. En l'espèce, AT=-24° et ACS=+43°.

Dans le mode de réalisation décrit, chaque portion PS, PS' du pneumatique 10 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la largeur axiale L de la couche de travail 18. Le plan médian M du pneumatique 10 coupe chaque portion PS, PS' du pneumatique 10. Plus préférentiellement, chaque portion PS, PS' du pneumatique 10 est centrée axialement sur le plan médian M du pneumatique 10.

Chaque élément de renfort filaire de travail 180 est un assemblage de deux monofilaments en acier présentant chacun un diamètre égal à 0,30 mm, les deux monofilaments en acier étant enroulés l'un avec l'autre au pas de 14 mm.

Chaque élément de renfort filaire de carcasse 340 comprend classiquement deux brins multifilamentaires, chaque brin multifilamentaire étant constitué d'un filé de monofilaments de polyesters, ici de PET, ces deux brins multifilamentaires étant surtordus individuellement à 240 tours par mètre dans un sens puis retordus ensemble à 240 tours par mètre dans le sens opposé. Ces deux brins multifilamentaires sont enroulés en hélice l'un autour de l'autre. Chacun de ces brins multifilamentaires présente un titre égal à 220 tex.

Chaque élément de renfort filaire de frettage 170 est formé par exemple par un câblé tel que décrit dans WO2016166056, WO2016166057, WO2019122620, WO2016091809, WC2016091810, WO2016091811 ou WO2016091812.

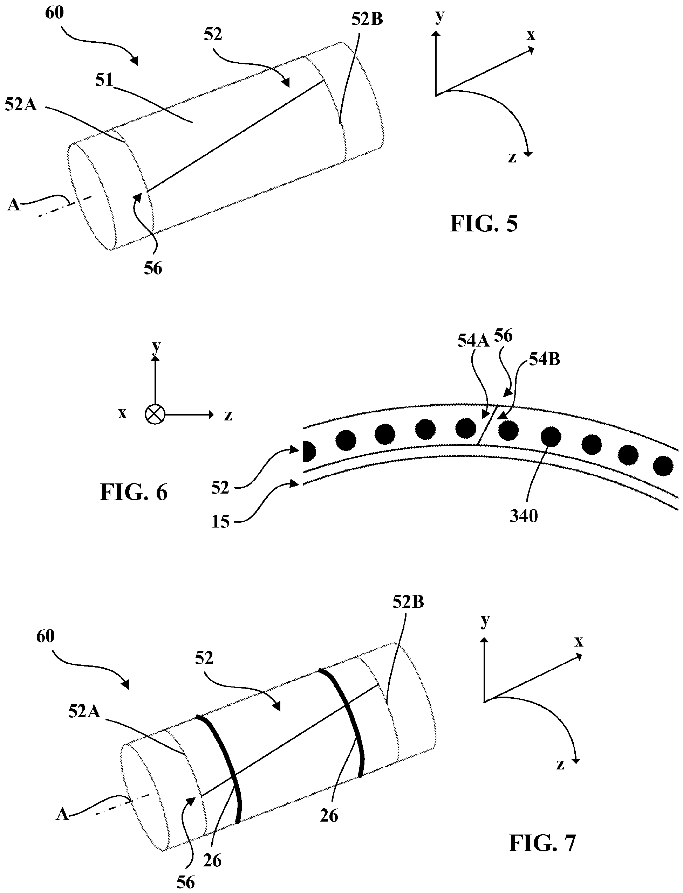

Le pneumatique 10 est obtenu par un procédé que l'on va décrire en référence aux figures 5 à 13.

Tout d'abord, on fabrique un ensemble de travail enroulé 50 et un ensemble de carcasse enroulé 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe. Puis, on découpe des portions de chaque nappe droite selon un angle de découpe et on aboute ces portions les unes aux autres de façon à obtenir une nappe dite à angle, dans laquelle les éléments de renfort filaires de la nappe sont parallèles les uns aux autres et forment un angle avec la direction principale de la nappe égal à l'angle de découpe.

Dans le mode de réalisation décrit, on obtient d'une part une unique nappe de travail 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de travail enroulé 50 et de carcasse 52 qui seront formés ultérieurement.

Dans une première étape d'assemblage d'une ébauche crue, on forme par enroulement d'une nappe d'étanchéité autour d'un support 60 présentant une forme sensiblement cylindrique autour de son axe principal A, la couche d'étanchéité 15 (non représentée sur la figure 5). Le support 60 présente une surface de pose sensiblement cylindrique de rayon égal à 235 mm.

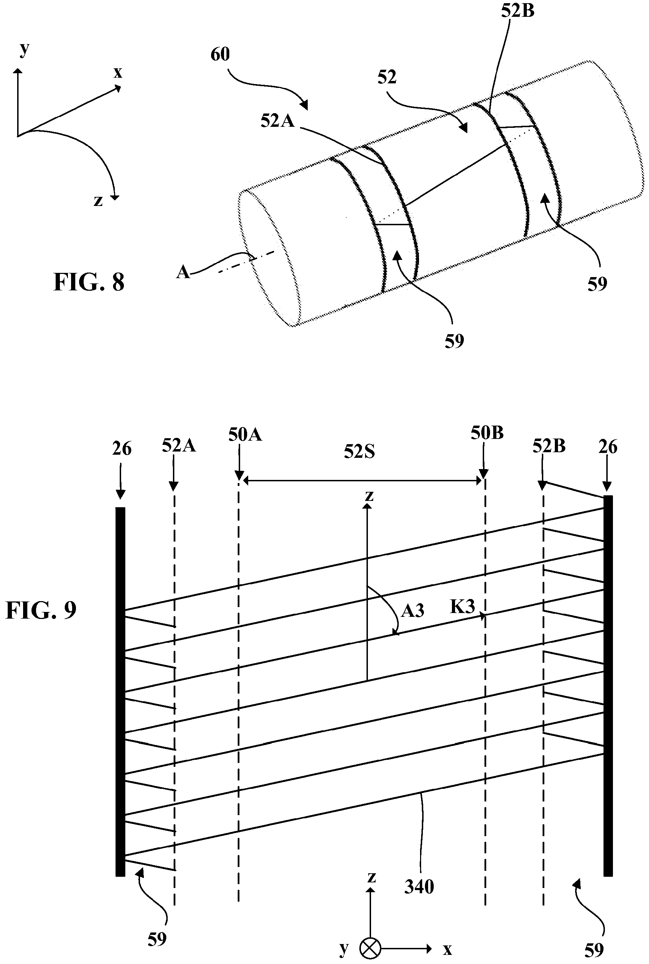

Puis, en référence à la figure 5, radialement à l'extérieur de la couche d'étanchéité, on forme par enroulement de la nappe de carcasse 51 autour du support 60, l'ensemble de carcasse enroulé 52 destiné à former la couche de carcasse 34. L'ensemble de carcasse enroulé 52 est délimité axialement par deux bords axiaux 52A, 52B de l'ensemble de carcasse 52 et comprend les éléments de renfort filaires de carcasse 340 s'étendant sensiblement parallèlement les uns aux autres axialement du bord axial 52A à l'autre bord axial 52B de l'ensemble de carcasse 52 enroulé. Chaque élément de renfort filaire de carcasse 340 s'étend, dans la nappe de carcasse 51, selon une direction principale K3 de chaque élément de renfort filaire de carcasse 340 de la nappe de carcasse 51.. En référence à la figure 9, la direction principale K3 forme, avec la direction circonférentielle z du support 60, un angle initial A3 de chaque élément de renfort filaire de carcasse 340, en valeur absolue, strictement supérieur à 0°, de préférence allant de 27° à 150° et plus préférentiellement allant de 56° à 123°. Ici A3=75°.

En référence à la figure 6, l'ensemble de carcasse enroulé 52 présente deux bords d'extrémité circonférentielle 54A, 54B s'étendant axialement du bord axial 52A à l'autre bord axial 52B de l'ensemble de carcasse 52. Chaque bord d'extrémité circonférentielle 54A, 54B de l'ensemble de carcasse 52 est destiné à former, dans le pneumatique 10, chaque bord d'extrémité circonférentielle 35A, 35B de la couche de carcasse 34.

Lors de l'étape de formation de l'ensemble de carcasse 52, on forme l'ensemble de carcasse enroulé 52 de façon à former la jonction 56 entre les deux bords d'extrémité circonférentielle 54A, 54B par aboutement face à face sans former de superposition entre un élément de renfort filaire de carcasse 340 d'un des bords d'extrémité circonférentielle 54A, 54B et un élément de renfort filaire de carcasse 340 de l'autre des bords d'extrémité circonférentielle 54A, 54B et ce au moins dans la portion 52S de l'ensemble de carcasse enroulé 52 destinée à s'étendre axialement à l'aplomb radial de l'ensemble de travail enroulé 50 et ici, sur l'ensemble de la largeur axiale de l'ensemble de carcasse enroulé 52 entre les deux bords axiaux 52A, 52B de l'ensemble de carcasse enroulé 52.

La portion 52S de l'ensemble de carcasse enroulé 52 est destinée à former la portion 34S de la couche de carcasse 34.

En référence aux figures 7 et 8, ensuite, on agence les deux éléments de renfort circonférentiels 26 autour de l'ensemble de carcasse enroulé 52 et on retourne axialement vers l'intérieur chaque bord axial 52A, 52B de l'ensemble de carcasse enroulé 52 de façon à recouvrir radialement chaque élément de renfort circonférentiel 26 par chaque bord axial 52A, 52B de l'ensemble de carcasse enroulé 52 et à former une portion 59 de l'ensemble de carcasse enroulé 52 enroulée autour de chaque élément de renfort circonférentiel 26. La portion 59 de l'ensemble de carcasse enroulé 52 est destinée à former la portion 34T de la couche de carcasse 34 enroulée autour de chaque élément de renfort circonférentiel 26 dans le pneumatique.

On a représenté sur la figure 9 un schéma illustrant l'agencement des éléments de renfort filaires 340 de carcasse à l'issue de l'étape de retournement axial des bords axiaux 52A, 52B de l'ensemble de carcasse enroulé 52 autour des éléments de renfort circonférentiel 26. Sur cette figure, on a représenté l'angle initial A3 décrit ci-dessus ainsi que les différentes portions 52S et 59.

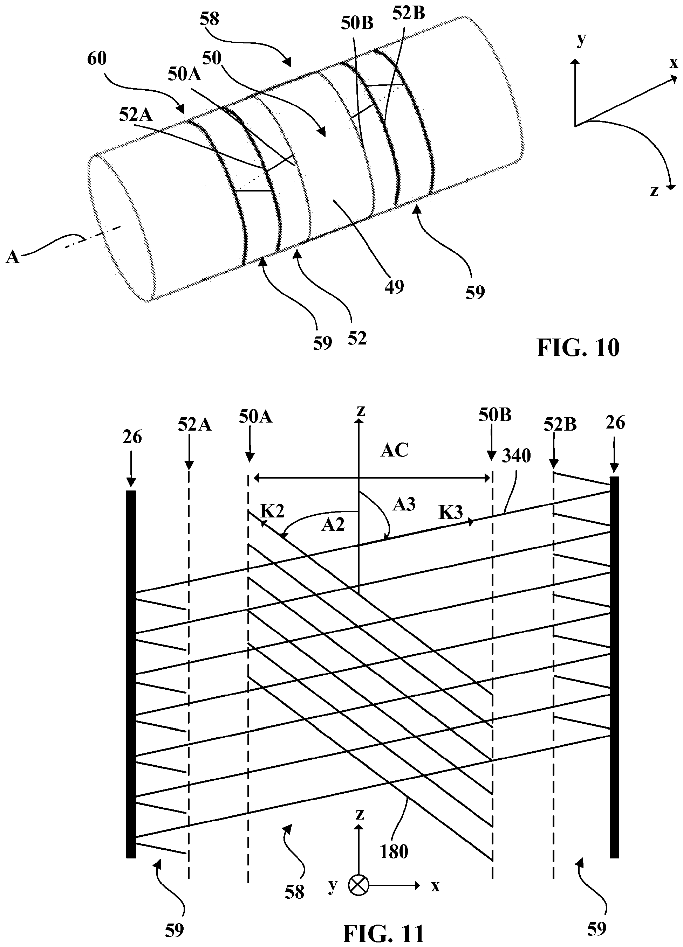

Puis, en référence à la figure 10, on forme par enroulement de la nappe de travail 49, radialement à l'extérieur de l'ensemble de carcasse enroulé 52, l'ensemble de travail enroulé 50 destiné à former la couche de travail 18. L'ensemble de travail enroulé 50 est délimité axialement par deux bords axiaux 50A, 50B de l'ensemble de travail enroulé 50 et comprend les éléments de renfort filaires de travail 180 s'étendant sensiblement parallèlement les uns aux autres axialement du bord axial 50A à l'autre bord axial 50B de l'ensemble de travail enroulé 50. Chaque élément de renfort filaire de travail 180 s'étend, dans la nappe de travail 49, selon une direction principale K2 de chaque élément de renfort filaire de travail 180 dans la nappe de travail 49. En référence à la figure 11, la direction principale K2 forme, avec la direction circonférentielle z du support 60, un angle initial A2 de chaque élément de renfort filaire de travail 180, en valeur absolue, strictement supérieur à 0°, de préférence allant de 4° à 60° et plus préférentiellement allant de 16° à 47°. Ici, A2=35°.

L'ensemble de carcasse enroulé 52 et l'ensemble de travail enroulé 50 forment alors un assemblage 58 de forme sensiblement cylindrique autour de l'axe principal A du support 60.

On a représenté sur la figure 11 un schéma analogue à celui de la figure 9 illustrant l'agencement des éléments de renfort filaires 340 de carcasse et des éléments de renfort filaires 180 de travail à l'issue de l'étape de formation de l'ensemble de travail enroulé 50. Sur cette figure, on a représenté les angles initiaux A2 et A3.

La direction principale K2 de chaque élément de renfort filaire de travail 180 et la direction principale K3 de chaque élément de renfort filaire de carcasse 340 forment, avec la direction circonférentielle z du support 60, dans une portion AC de l'assemblage 58 comprise axialement entre les bords axiaux 50A, 50B de l'ensemble de travail enroulé 50, des angles initiaux A2 et A3 d'orientations opposées. En l'espèce, A2=-35° et A3=+75°.

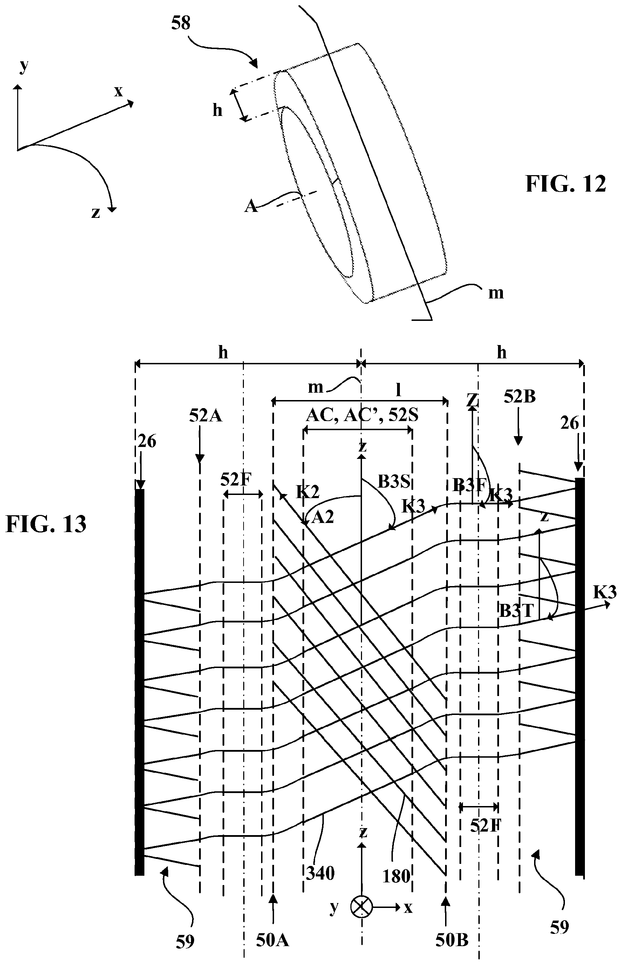

Puis, on déforme l'assemblage 58 de forme sensiblement cylindrique autour de l'axe principal A du support 60 de façon à obtenir l'assemblage 58 de forme sensiblement torique autour de l'axe principal A du support 60. On obtient l'assemblage déformé 58 illustrée sur les figures 12 et 13. La surface de pose du support 60 présente alors, au niveau du plan médian du support, un rayon égal à 327 mm.

On déforme l'assemblage 58 de forme sensiblement cylindrique autour de l'axe principal A du support 60 de façon à obtenir un assemblage 58 de forme sensiblement torique autour de l'axe principal A du support 60 de sorte que la direction principale K3 de chaque élément de renfort filaire de carcasse 340 forme, avec la direction circonférentielle z du support 60, un angle final B3S de chaque élément de renfort filaire de carcasse 340, en valeur absolue, strictement inférieur à 80°, dans la portion 52S de l'ensemble de carcasse enroulé 52 s'étendant axialement à l'aplomb radial de l'ensemble de travail enroulé 50. Avantageusement, l'angle final B3S est, en valeur absolue, supérieur ou égal à 10°, de préférence va de 20° à 75° et plus préférentiellement va de 35 à 70°. Ici, B3S=43°.

La portion 52S de l'ensemble de carcasse enroulé 52 s'étendant axialement à l'aplomb radial de l'ensemble de travail enroulé 50 présente une largeur axiale égale à au moins 40%, de préférence au moins 50% de la largeur axiale l de l'ensemble de travail enroulé 50 et égale à au plus 90%, de préférence au plus 80% de la largeur axiale l de l'ensemble de travail enroulé 50 et, en l'espèce est égale à 60% de la largeur axiale l de l'ensemble de travail enroulé 50. Le plan médian m de l'assemblage 58 coupe cette portion 52S. Plus préférentiellement, cette portion 52S est centrée axialement sur le plan médian m de l'assemblage 58.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K3 de chaque élément de renfort filaire de carcasse 340 forme, avec la direction circonférentielle z du support 60, un angle final B3F de chaque élément de renfort filaire de carcasse 340 allant de 80° à 90°, dans une portion 52F de l'ensemble de carcasse enroulé 52 destinée à s'étendre radialement dans chaque flanc 22 du pneumatique 10. Chaque portion 52F de l'ensemble de carcasse enroulé 52 est destinée à former chaque portion 34F de la couche de carcasse 34.

Chaque portion 52F de de l'ensemble de carcasse enroulé 52 destinée à s'étendre radialement dans chaque flanc 22 présente une hauteur radiale égale à au moins 5%, de préférence au moins 15% et encore plus préférentiellement au moins 30% de la hauteur radiale H du pneumatique fabriqué et égale à au plus 80%, de préférence au plus 70% et encore plus préférentiellement au plus 60% de la hauteur radiale H du pneumatique fabriqué, et en l'espèce est égale à 41% de la hauteur radiale H du pneumatique fabriqué. Le plan circonférentiel équatorial e de l'assemblage 58 coupe chaque portion 52F de l'ensemble de carcasse enroulé 52 destinée à être située dans chaque flanc 22.

Lors de l'étape de déformation, l'angle final B3T formé par la direction principale K3 de chaque élément de renfort filaire de carcasse 340, avec la direction circonférentielle z du support 60, dans la portion 59 enroulée de l'ensemble de carcasse enroulé 52, est sensiblement identique à l'angle initial A3 avant l'étape de déformation.

Enfin, on déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K2 de chaque élément de renfort filaire de travail 340 forment, avec la direction circonférentielle z du support 60, un angle final B2 de chaque élément de renfort filaire de travail 340, en valeur absolue, strictement supérieur à 10°. Avantageusement, l'angle final B2 va, en valeur absolue, de 15° à 50°, de préférence de 18° à 30° et ici B2=24°.

La direction principale K2 de chaque élément de renfort filaire de travail 180 et la direction principale K3 de chaque élément de renfort filaire de carcasse 340 forment, avec la direction circonférentielle z du support 60, dans une portion AC de l'assemblage 58 comprise axialement entre les bords axiaux 50A, 50B de l'ensemble de travail enroulé 50, des angles finaux B2 et B3 d'orientations opposées. En l'espèce, B2=-24° et B3=+43°.

Au cours du procédé, on noie plusieurs éléments de renfort filaires de frettage 170, de préférence adhérisés, dans une matrice élastomérique pour former une nappe de frettage.

Puis, on agence, radialement autour de l'assemblage 58 préalablement formé sur le support 60, un ensemble de frettage enroulé destiné à former l'armature de frettage 17. Ici, l'ensemble de frettage enroulé est formé par enroulement hélicoïdal de la nappe de frettage sur une forme torique puis l'ensemble de frettage enroulé est transféré à l'aide d'un anneau de transfert radialement à l'extérieur de l'assemblage préalablement formé. En variante, on pourra directement enrouler circonférentiellement hélicoidalement la nappe de frettage autour de l'assemblage préalablement formé de façon à former l'ensemble de frettage enroulé.

Dans le mode de réalisation illustré, l'ensemble de frettage enroulé présente une largeur axiale plus petite que la largeur axiale de l'ensemble de travail enroulé 50. Ainsi, l'ensemble de frettage enroulé est axialement le moins large des ensembles de travail enroulé 50 et de frettage enroulé.

L'angle A1 formé par la direction principale K1 de chaque élément de renfort filaire de frettage 170 avec la direction circonférentielle z du support 60 est, en valeur absolue, inférieur ou égal à 10°, de préférence inférieur ou égal à 7° et plus préférentiellement inférieur ou égal à 5° et ici égal à 5°.

La direction principale K1 de chaque élément de renfort filaire de frettage 170, la direction principale K2 de chaque élément de renfort filaire de travail 180 et la direction principale D3 de chaque élément de renfort filaire de carcasse 340 forment, avec la direction circonférentielle z du support 60, dans une portion AC de l'assemblage 58 et de l'ensemble de frettage enroulé comprises axialement entre les bords axiaux de de l'ensemble de frettage enroulé, des angles deux à deux différents en valeur absolue.

La portion AC' de l'assemblage 58 et de l'ensemble de frettage enroulé comprise axialement entre les bords axiaux de l'ensemble de frettage enroulé présente une largeur axiale égale à au moins 40%, de préférence au moins 50% de la largeur axiale L de l'ensemble de travail enroulé 50 et au plus 90%, de préférence au plus 80% de la largeur axiale L de de l'ensemble de travail enroulé 50 et en l'espèce ici 60% de la largeur axiale L de de l'ensemble de travail enroulé 50. Le plan médian m de l'assemblage 58 coupe cette portion AC'. Plus préférentiellement, cette portion AC' est centrée axialement sur le plan médian m de l'assemblage 58.Puis, on agence, radialement à l'extérieur de l'ensemble de frettage enroulé, une bande de matériau polymérique destiné à former la bande de roulement 20, de façon à former une ébauche crue du pneumatique 10. Dans une variante, on pourra agencer radialement à l'extérieur de l'ensemble de frettage, la bande de matériau polymérique destiné à former la bande de roulement 20 puis transférer cet ensemble radialement à l'extérieur de l'assemblage 58 préalablement formé sur le support 60. Dans une autre variante, on pourra, après avoir agencé l'ensemble de frettage enroulé radialement autour de l'assemblage 58 préalablement formé sur le support 60, agencer la bande de matériau polymérique destiné à former la bande de roulement 20.

L'ensemble ainsi formé, appelée ébauche crue du pneumatique en raison de la présence de compositions réticulables à l'état non réticulées, est ensuite placée dans un moule pour procéder d'une part à une étape de moulage et d'autre part à une étape de réticulation des compositions réticulables. Lors l'étape de moulage, on expanse radialement et circonférentiellement, l'ébauche crue, par exemple par mise sous pression d'une membrane déformable, de façon à plaquer l'ébauche crue contre des surfaces d'un moule de cuisson.

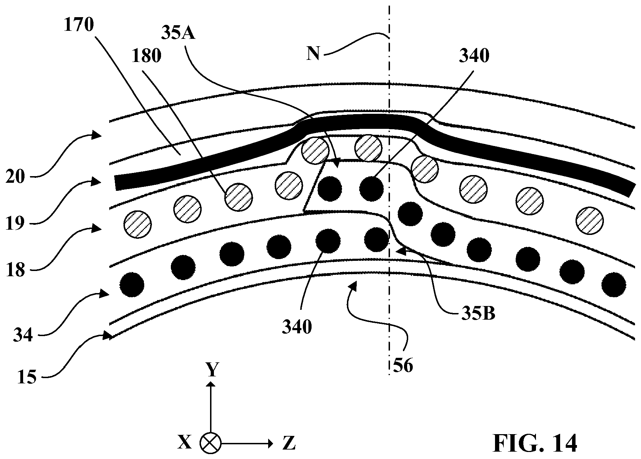

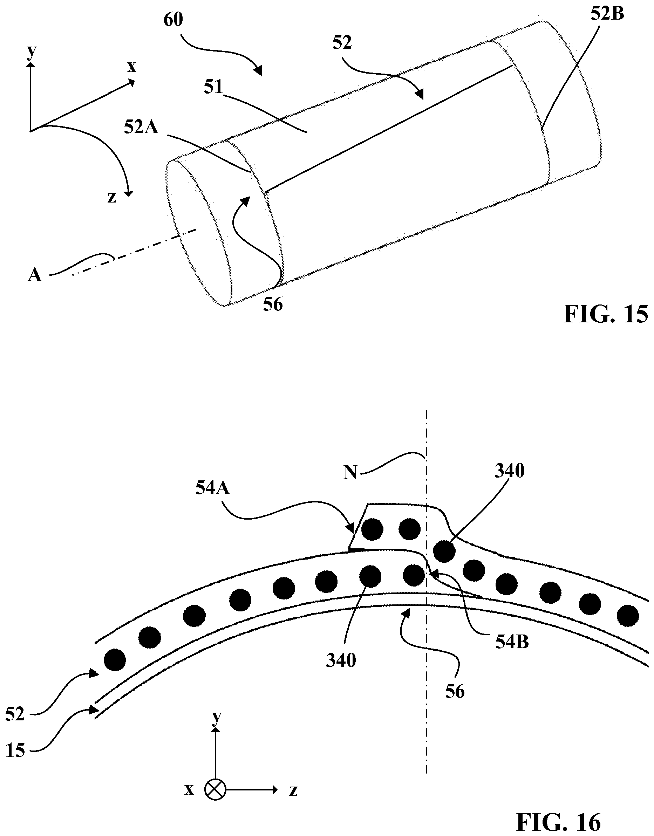

On va maintenant décrire un deuxième mode de réalisation en référence aux figures 14 à 16. Les éléments analogues au premier mode de réalisation sont désignés par des références identiques.

A la différence du pneumatique selon le premier mode de réalisation, la couche de carcasse 34 s'étend circonférentiellement en formant la jonction 56 par recouvrement de façon à former une superposition radiale entre au moins un élément de renfort filaire de carcasse 340 d'un des bords d'extrémité circonférentielle 35A, 35B et au moins un élément de renfort filaire de carcasse 340 de l'autre des bords d'extrémité circonférentielle 35A, 35B au moins dans la portion 34S de la couche de carcasse 34 s'étendant axialement à l'aplomb radial de la couche de travail 18, et ici, sur l'ensemble de la largeur axiale de la couche de carcasse 34 entre les deux bords axiaux 34A, 34B de la couche de carcasse 34.

En l'espèce, le bord d'extrémité circonférentielle radialement le plus extérieur 35A de la couche de carcasse 34 recouvre le bord d'extrémité circonférentielle radialement le plus intérieur 35B de la couche de carcasse 34 avec au plus 4 éléments de renfort filaires de carcasse 340, de préférence au plus 3 éléments de renfort filaires de carcasse 340 et encore plus préférentiellement au plus 2 éléments de renfort filaires de carcasse 340 et avec au moins 1 élément de renfort filaire de carcasse 340 au moins dans la portion 34S de la couche de carcasse 34 s'étendant axialement à l'aplomb radial de la couche de travail 18 et ici, sur l'ensemble de la largeur axiale de la couche de carcasse 34 entre les deux bords axiaux 34A, 34B de la couche de carcasse 34. En l'espèce, le bord d'extrémité circonférentielle radialement le plus extérieur 35A recouvre le bord d'extrémité circonférentielle radialement le plus intérieur 35B avec 2 éléments de renfort filaires de carcasse 340 sur l'ensemble de la largeur axiale de la couche de carcasse 34 entre les deux bords axiaux 34A, 34B de la couche de carcasse 34. Afin de déterminer, le nombre d'éléments de renfort filaires de carcasse 340 du bord d'extrémité circonférentielle radialement le plus extérieur 35A recouvrant le bord d'extrémité circonférentielle radialement le plus intérieur 35B, on détermine le plan méridien N perpendiculaire à l'axe de rotation du pneumatique passant par l'extrémité axiale de l'élément de renfort filaire de carcasse 340 du bord d'extrémité circonférentielle radialement le plus intérieur 35B la plus proche axialement de la face d'extrémité axiale de ce bord 35B. Tout élément de renfort filaire de carcasse 340 du bord d'extrémité circonférentielle radialement le plus extérieur 35A situé du côté de ce plan méridien N en surplomb du bord d'extrémité circonférentielle radialement le plus intérieur 35B est un élément de renfort filaire de carcasse 340 du bord d'extrémité circonférentielle radialement le plus extérieur 35A recouvrant le bord d'extrémité circonférentielle radialement le plus intérieur 35B.

A la différence du procédé selon le premier mode de réalisation, dans le deuxième mode de réalisation, on forme l'ensemble de carcasse enroulé 52 de façon à former la jonction 56 entre les deux bords d'extrémité circonférentielle 54A, 54B par recouvrement de façon à former une superposition radiale entre au moins un élément de renfort filaire de carcasse 340 d'un des bords d'extrémité circonférentielle 54A, 54B et au moins un élément de renfort filaire de carcasse 340 de l'autre des bords d'extrémité circonférentielle 54A, 54B, au moins dans la portion 52S de l'ensemble de carcasse enroulé 52 destinée à s'étendre axialement à l'aplomb radial de l'ensemble de travail enroulé 50. En l'espèce, l'ensemble de carcasse enroulé 52 s'étend circonférentiellement en formant la jonction 56 par recouvrement de façon à former une superposition radiale entre au moins un élément de renfort filaire de carcasse 340 d'un des bords d'extrémité circonférentielle 54A, 54B et au moins un élément de renfort filaire de carcasse 340 de l'autre des bords d'extrémité circonférentielle 54A, 54B sur l'ensemble de la largeur axiale de l'ensemble de carcasse enroulé 52 entre les deux bords axiaux 52A, 52B de l'ensemble de carcasse enroulé 52.

Cette étape de formation est réalisée de sorte que, si on ne faisait pas d'étape formation de l'ensemble de travail enroulé 50 préalablement à l'étape de déformation, l'étape de déformation, réalisée dans des conditions de déformation identiques, entraînerait une ouverture de la jonction 56. Ici, comme on réalise l'étape de formation de l'ensemble de travail enroulé 50 préalablement à l'étape de déformation, on n'observe aucune ouverture de la jonction 56 malgré un nombre réduit de d'éléments de renfort filaires du bord d'extrémité circonférentielle radialement le plus extérieur 54A de l'ensemble de carcasse enroulé 52 recouvrant radialement le bord d'extrémité circonférentielle radialement le plus intérieur 54B de l'ensemble de carcasse enroulé 52.

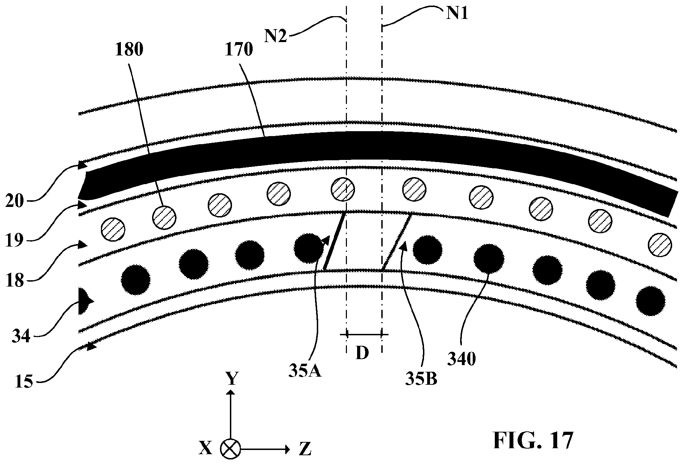

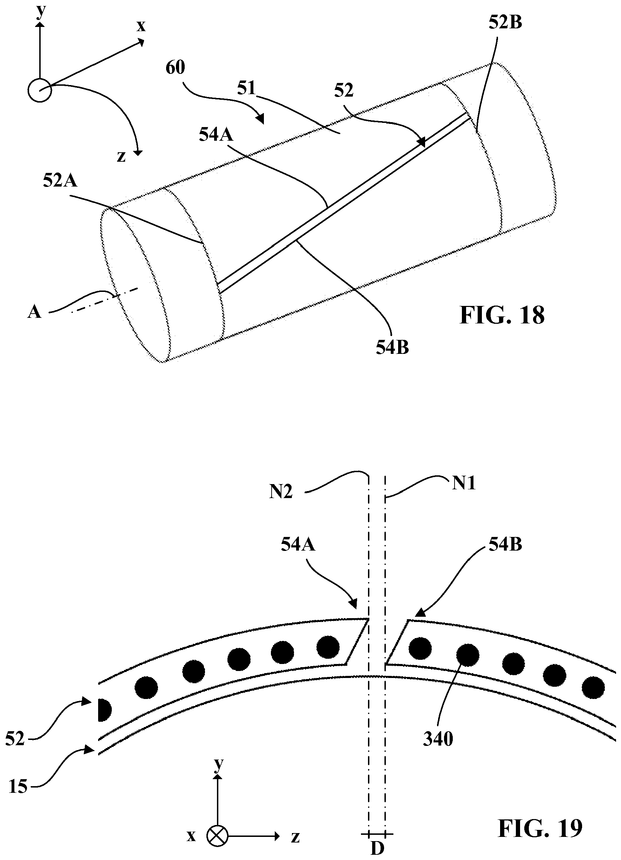

On va maintenant décrire un troisième mode de réalisation en référence aux figures 17 à 19. Les éléments analogues à ceux des modes de réalisation précédents sont désignés par des références identiques.

A la différence du pneumatique selon le premier mode de réalisation, les deux bords d'extrémité circonférentiels 35A, 35B sont distants circonférentiellement l'un de l'autre au moins dans la portion de la couche de carcasse 34S s'étendant axialement à l'aplomb radial de la couche de travail 18 et ici, sur l'ensemble de la largeur axiale de la couche de carcasse 34 entre les deux bords axiaux 35A, 35B de la couche de carcasse 34. Dans l'exemple, les bords d'extrémité circonférentielle 35A, 35B de la couche de carcasse 34 sont circonférentiellement distants d'une distance moyenne d'au plus 2,5 mm, de préférence d'au plus 2 mm et plus préférentiellement d'au plus 1 mm dans la portion 34S de la couche de carcasse 34 s'étendant axialement à l'aplomb radial de la couche de travail 18 et ici, sur l'ensemble de la largeur axiale de la couche de carcasse 34 entre les deux bords axiaux 35A, 35B de la couche de carcasse 34. En l'espèce, les bords d'extrémité circonférentielle 35A, 35B de la couche de carcasse 34 sont circonférentiellement distants d'une distance moyenne égale à 1 mm dans la portion 34S de la couche de carcasse 34 s'étendant axialement à l'aplomb radial de la couche de travail 18 et ici, sur l'ensemble de la largeur axiale de la couche de carcasse 34 entre les deux bords axiaux 35A, 35B de la couche de carcasse 34. La distance moyenne est calculée en faisant la moyenne de dix distances D mesurées de façon équiréparties sur la largeur axiale de la portion 34S de la couche de carcasse 34 s'étendant à l'aplomb radial de la couche de travail 18. Chaque distance D est la distance droite entre les deux plans méridiens N1, N2 parallèles à l'axe de rotation du pneumatique et passant respectivement par le point d'extrémité circonférentielle de chaque bord d'extrémité circonférentiels 35A, 35B.

A la différence du procédé selon le premier mode de réalisation, on forme l'ensemble de carcasse enroulé 52 de sorte que les deux bords d'extrémité circonférentielle 54A, 54B soient distants circonférentiellement l'un de l'autre au moins dans la portion 52S de l'ensemble de carcasse enroulé 52 destinée à s'étendre axialement à l'aplomb radial de l'ensemble de travail enroulé 50, et ici sur l'ensemble de la largeur axiale de l'ensemble de carcasse enroulé 52 entre les deux bords axiaux 52A, 52B de l'ensemble de carcasse enroulé 52. De façon analogue au pneumatique, les bords d'extrémité circonférentielles 54A, 54B de l'ensemble de carcasse enroulé 52 sont circonférentiellement distants d'une distance moyenne d'au plus 2,5 mm, de préférence d'au plus 2 mm et plus préférentiellement d'au plus 1 mm au moins dans la portion 52S de l'ensemble de carcasse 5 enroulé 2 destinée à s'étendre axialement à l'aplomb radial de l'ensemble de travail enroulé 50, et ici sur l'ensemble de la largeur axiale de l'ensemble de carcasse enroulé 52 entre les deux bords axiaux 52A, 52B de l'ensemble de carcasse enroulé 52. En l'espèce, les bords d'extrémité circonférentielle 54A, 54B de l'ensemble de carcasse enroulé 52 sont circonférentiellement distants d'une distance moyenne sensiblement égale à la distance moyenne mesurée dans le pneumatique 10, c'est-à-dire 1 mm, dans la portion 52S de l'ensemble de carcasse enroulé 52 destinée à s'étendre axialement à l'aplomb radial de de l'ensemble de travail enroulé 50 et ici, sur l'ensemble de la largeur axiale de l'ensemble de carcasse enroulé 52 entre les deux bords axiaux 52A, 52B de l'ensemble de carcasse enroulé 52. De façon analogue au pneumatique 10, la distance moyenne est calculée en faisant la moyenne de dix distances D mesurées de façon équiréparties sur la largeur axiale de la portion 52S de l'ensemble de carcasse enroulé 52 destinée à s'étendre à l'aplomb radial de l'ensemble de travail enroulé 50. Chaque distance D est la distance droite entre les deux plans méridiens N1, N2 parallèles à l'axe principal A du support 60 et passant respectivement par le point d'extrémité axiale de chaque bord d'extrémité circonférentielle 52A, 52B.

L'invention ne se limite pas aux modes de réalisation précédemment décrits.

## Revendications

1. Procédé de fabrication d'un pneumatique (10) comprenant un sommet (12), deux flancs (22), deux bourrelets (24), chaque flanc (22) reliant chaque bourrelet (24) au sommet (12), le pneumatique (10) comprenant une armature de carcasse (32) ancrée dans chaque bourrelet (24) et s'étendant dans chaque flanc (22) et radialement intérieurement au sommet (12), l'armature de carcasse (32) comprenant au moins une couche de carcasse (34), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de sommet (14) comprenant une armature de travail (16) comprenant une unique couche de travail (18),
procédé dans lequel :
- on forme par enroulement d'une nappe de carcasse (51) ou de plusieurs nappes de carcasse (51) autour d'un support (60) présentant une forme sensiblement cylindrique autour d'un axe principal (A), au moins un ensemble de carcasse enroulé (52) destiné à former la couche de carcasse (34), l'ensemble de carcasse enroulé (52) étant délimité axialement par deux bords axiaux (52A, 52B) de l'ensemble de carcasse enroulé (52) et comprenant des éléments de renfort filaires de carcasse (340) s'étendant sensiblement parallèlement les uns aux autres axialement d'un bord axial (52A, 52B) à l'autre bord axial (52A, 52B) de l'ensemble de carcasse enroulé (52), chaque élément de renfort filaire de carcasse (340) s'étendant, dans la ou chaque nappe de carcasse (51), selon une direction principale (K3) de chaque élément de renfort filaire de carcasse (340), la direction principale (K3) de chaque élément de renfort filaire de carcasse (340) dans la ou chaque nappe de carcasse (51) formant, avec la direction circonférentielle (Z) du support (60), un angle initial (A3) de chaque élément de renfort filaire de carcasse (340),
- on forme par enroulement d'une nappe de travail (49) ou de plusieurs nappes de travail (50), radialement à l'extérieur de l'ensemble de carcasse enroulé (52), un ensemble de travail enroulé (50) destiné à former la couche de travail (18), l'ensemble de travail enroulé (50) étant délimité axialement par deux bords axiaux (50A, 50B) de l'ensemble de travail enroulé (50) et comprenant des éléments de renfort filaires de travail (180) s'étendant sensiblement parallèlement les uns aux autres axialement d'un bord axial (50A, 50B) à l'autre bord axial (50A, 50B) de l'ensemble de travail enroulé (50), chaque élément de renfort filaire de travail (180) s'étendant, dans la ou chaque nappe de travail (49), selon une direction principale (K2) de chaque élément de renfort filaire de travail (180) dans la ou chaque nappe de travail (49), la direction principale (K2) de chaque élément de renfort filaire de travail (180) dans la ou chaque nappe de travail (49) formant, avec la direction circonférentielle (Z) du support (60), un angle initial (A2) de chaque élément de renfort filaire de travail (180), l'ensemble de carcasse enroulé (52) et l'ensemble de travail enroulé (50) formant un assemblage (58) de forme sensiblement cylindrique autour de l'axe principal (A) du support (60),
- on déforme l'assemblage (58) de forme sensiblement cylindrique autour de l'axe principal (A) du support (60) de façon à obtenir un assemblage (58) de forme sensiblement torique autour de l'axe principal (A) du support (60) de sorte que:
- la direction principale (K3) de chaque élément de renfort filaire de carcasse (340) forme, avec la direction circonférentielle (z) du support (60) :
- un angle final (B3S) de chaque élément de renfort filaire de carcasse (340), en valeur absolue, strictement inférieur à 80°, dans une portion (52S) de l'ensemble de carcasse enroulé (52) s'étendant axialement à l'aplomb radial de l'ensemble de travail enroulé (50),
- un angle final (B3F) de chaque élément de renfort filaire de carcasse (340) allant, en valeur absolue, de 80° à 90°, dans une portion (52F) de l'ensemble de carcasse enroulé (52) destinée à s'étendre radialement dans chaque flanc (22),
- la direction principale (K2) de chaque élément de renfort filaire de travail (180) forme, avec la direction circonférentielle (z) du support (60), un angle final (B2) de chaque élément de renfort filaire de travail (180), en valeur absolue, strictement supérieur à 10°, procédé **caractérisé en ce que**
lors de l'étape de formation de l'ensemble de carcasse enroulé (52), l'ensemble de carcasse enroulé (52) présentant deux bords d'extrémité circonférentielle (54A, 54B) s'étendant axialement d'un des bords axiaux (52A, 52B) à l'autre des bords axiaux (52A, 52B) de l'ensemble de carcasse enroulé (52), on met en oeuvre l'une des alternatives I, II, III suivantes:
I - on forme l'ensemble de carcasse enroulé (52) de façon à former une jonction (56) entre les deux bords d'extrémité circonférentielle (54A, 54B) de l'ensemble de carcasse enroulé (52) par aboutement sans former de superposition entre un élément de renfort filaire de carcasse (340) d'un des bords d'extrémité circonférentielle (54A, 54B) de l'ensemble de carcasse enroulé (52) et un élément de renfort filaire de carcasse (340) de l'autre des bords d'extrémité circonférentielle (54A, 54B) de l'ensemble de carcasse enroulé (52), au moins dans la portion (52S) de l'ensemble de carcasse enroulé (52) destinée à s'étendre axialement à l'aplomb radial de l'ensemble de travail enroulé (50),
II - on forme l'ensemble de carcasse enroulé (52) de façon à former une jonction (56) entre les deux bords d'extrémité circonférentielle (54A, 54B) de l'ensemble de carcasse enroulé par recouvrement de façon à former une superposition radiale entre au moins un élément de renfort filaire de carcasse (340) d'un des bords d'extrémité circonférentielle (54A, 54B) de l'ensemble de carcasse enroulé et au moins un élément de renfort filaire de carcasse (340) de l'autre des bords d'extrémité circonférentielle (54A, 54B) de l'ensemble de carcasse enroulé, au moins dans la portion (52S) de l'ensemble de carcasse enroulé (52) destinée à s'étendre axialement à l'aplomb radial de l'ensemble de travail enroulé (50), de sorte que, sans étape de formation de l'ensemble de travail enroulé (50) préalablement à l'étape de déformation, l'étape de déformation mise en oeuvre dans des conditions identiques entraînerait une ouverture de la jonction (56),
III - on forme l'ensemble de carcasse enroulé (52) de sorte que :
- les deux bords d'extrémité circonférentielle (54A, 54B) de l'ensemble de carcasse enroulé soient distants circonférentiellement l'un de l'autre,
- il existe un espace de séparation entre les deux bords d'extrémités circonférentielle (54A, 54B) de l'ensemble de carcasse enroulé (52) lors de l'étape de formation de l'ensemble de travail enroulé (50),
au moins dans la portion (52S) de l'ensemble de carcasse enroulé (52) destinée à s'étendre axialement à l'aplomb radial de l'ensemble de travail enroulé (50).

2. Procédé selon la revendication précédente, dans lequel, lors de l'étape de formation de l'ensemble de carcasse enroulé (52), on met en oeuvre l'une des alternatives I ou II.

3. Procédé selon la revendication précédente, dans lequel, lors de l'étape de formation de l'ensemble de carcasse enroulé (52), on met en oeuvre l'alternative I.

4. Procédé selon l'une quelconque des revendications précédentes, dans lequel, postérieurement à l'étape de déformation de l'assemblage (58), on agence, radialement à l'extérieur de l'assemblage (58) de forme sensiblement torique, un ensemble de frettage enroulé destiné à former une armature de frettage (17), l'ensemble de frettage enroulé étant formé par enroulement hélicoïdal d'au moins un élément de renfort filaire de frettage (170) ou d'une nappe de frettage obtenue par noyage d'un ou de plusieurs éléments de renfort filaires de frettage (170) dans une matrice élastomérique, de façon à s'étendre axialement d'un bord axial à l'autre bord axial de l'ensemble de frettage enroulé.

5. Procédé selon l'une quelconque des revendications précédentes, dans lequel l'angle initial (A2) formé par la direction principale (K2) de chaque élément de renfort filaire de travail (180) avec la direction circonférentielle (z) du support (60) est, en valeur absolue, strictement supérieur à 0°, de préférence va de 4° à 60° et plus préférentiellement va de 16° à 47°.

6. Procédé selon l'une quelconque des revendications précédentes, dans lequel l'angle initial (A3) formé par la direction principale (K3) de chaque élément de renfort filaire de carcasse (340) avec la direction circonférentielle (z) du support (60) est, en valeur absolue, strictement supérieur à 0°, de préférence va de 27° à 150° et plus préférentiellement va de 56° à 123°.

7. Procédé selon l'une quelconque des revendications précédentes, dans lequel l'angle final (B2) formé par la direction principale (K2) de chaque élément de renfort filaire de travail (180) avec la direction circonférentielle (z) du support (60) va, en valeur absolue, de 15° à 50°, de préférence de 18° à 30°.

8. Procédé selon l'une quelconque des revendications précédentes, dans lequel l'angle final (B3S) formé par la direction principale (K3) de chaque élément de renfort filaire de carcasse (340) avec la direction circonférentielle (z) du support (60) est, en valeur absolue, supérieur ou égal à 10°, de préférence va de 20° à 75° et plus préférentiellement va de 35 à 70°, dans la portion (52S) de l'ensemble de carcasse enroulé (52) s'étendant axialement à l'aplomb radial de l'ensemble de travail enroulé (50).

9. Pneumatique (10) obtenu par un procédé selon l'une quelconque des revendications précédentes.

10. Pneumatique (10) selon la revendication précédente, dans lequel :
- la couche de travail (18) est délimitée axialement par deux bords axiaux (18A, 18B) de la couche de travail (18) et comprend les éléments de renfort filaires de travail (180) s'étendant axialement d'un bord axial (18A, 18B) à l'autre bord axial (18A, 18B) de la couche de travail (18) les uns sensiblement parallèlement aux autres selon une direction principale (D2) de chaque élément de renfort filaire de travail (180) formant, avec la direction circonférentielle (Z) du pneumatique (10), un angle (AT) , en valeur absolue, strictement supérieur à 10°,
- la couche de carcasse (34) est délimitée axialement par deux bords axiaux (34A, 34B) de la couche de carcasse (34) et comprend les éléments de renfort filaires de carcasse (340) s'étendant axialement d'un bord axial (34A, 34B) à l'autre bord axial (34A, 34B) de la couche de carcasse (34), chaque élément de renfort filaire de carcasse (340) s'étendant selon une direction principale (D3) de chaque élément de renfort filaire de carcasse (340) formant, avec la direction circonférentielle (Z) du pneumatique (10):
- un angle (ACS) , en valeur absolue, strictement inférieur à 80° dans une portion (34S) de la couche de carcasse (34) s'étendant axialement à l'aplomb radial de la couche de travail (18),
- un angle (ACF), en valeur absolue, allant de 80° à 90° dans au moins une portion (34F) de la couche de carcasse (34) s'étendant radialement dans chaque flanc (22).

11. Pneumatique (10) selon la revendication 9 ou 10, dans lequel l'armature de sommet (14) comprend une armature de frettage (17) agencée radialement à l'extérieur de l'armature de travail (16), l'armature de frettage (17) étant délimitée axialement par deux bords axiaux (17A, 17B) de l'armature de frettage (17) et comprenant au moins un élément de renfort filaire de frettage (170) enroulé circonférentiellement hélicoïdalement de façon à s'étendre axialement d'un bord axial (17A, 17B) à l'autre bord axial (17A, 17B) de l'armature de frettage (17) selon une direction principale (D1) du ou de chaque élément de renfort filaire de frettage (170).

12. Pneumatique (10) selon la revendication précédente, dans lequel la direction principale (D1) du ou de chaque élément de renfort filaire de frettage (170), la direction principale (D2) de chaque élément de renfort filaire de travail (180) et la direction principale (D3) de chaque élément de renfort filaire de carcasse (340) forment, avec la direction circonférentielle (Z) du pneumatique (10), dans une portion (PS') du pneumatique (10) comprise axialement entre les bords axiaux de la couche ou de l'armature axialement la moins large parmi la couche de travail (18) et l'armature de frettage (17), des angles (D1, D2, D3) deux à deux différents en valeur absolue.

13. Pneumatique (10) selon l'une quelconque des revendications 9 à 12, dans lequel la direction principale (D2) de chaque élément de renfort filaire de travail (180) et la direction principale (D3) de chaque élément de renfort filaire de carcasse (340) forment, avec la direction circonférentielle (Z) du pneumatique (10), dans une portion (PS) du pneumatique (10) comprise axialement entre les bords axiaux (18A, 18B) de la couche de travail (18), des angles (D2, D3) d'orientations opposées.

14. Pneumatique (10) selon l'une quelconque des revendications 9 à 13, dans lequel la direction principale (D2) de chaque élément de renfort filaire de travail (180) forme, avec la direction circonférentielle (Z) du pneumatique (10), un angle (AT) allant, en valeur absolue, de 15° à 50°, de préférence de 18° à 30°.

15. Pneumatique (10) selon l'une quelconque des revendications 9 à 14, dans lequel la direction principale (D3) de chaque élément de renfort filaire de carcasse (340) forme, avec la direction circonférentielle (Z) du pneumatique (10), un angle (ACS), en valeur absolue, supérieur ou égal à 10°, de préférence allant de 20° à 75° et plus préférentiellement va de 35° à 70°, dans la portion (34S) de la couche de carcasse (34) s'étendant axialement à l'aplomb radial de la couche de travail (18).

## Patentansprüche

1. Verfahren zur Herstellung eines Reifens (10), der einen Scheitel (12), zwei Flanken (22), zwei Wülste (24) beinhaltet, wobei jede Flanke (22) jeden Wulst (24) mit dem Scheitel (12) verbindet, wobei der Reifen (10) eine Karkassenbewehrung (32) beinhaltet, die in jedem Wulst (24) verankert ist und sich in jeder Flanke (22) und zu dem Scheitel (12) radial innenliegend erstreckt, wobei die Karkassenbewehrung (32) mindestens eine Karkassenschicht (34) beinhaltet, wobei der Scheitel (12) Folgendes beinhaltet:
- eine Lauffläche (20), die dazu bestimmt ist, beim Rollen des Reifens (10) mit einem Boden in Kontakt zu kommen,
- eine Scheitelbewehrung (14), die radial zwischen der Lauffläche (20) und der Karkassenbewehrung (32) angeordnet ist, wobei die Scheitelbewehrung (14) eine Arbeitsbewehrung (16) beinhaltet, die eine einzige Arbeitsschicht (18) beinhaltet,
wobei das Verfahren aus Folgendem besteht:
- Bilden, durch das Wickeln einer Karkassenlage (51) oder mehrerer Karkassenlagen (51) um einen Träger (60), der eine im Wesentlichen zylindrische Form um eine Hauptachse (A) aufweist, mindestens einer gewickelten Karkasseneinheit (52), die dazu bestimmt ist, die Karkassenschicht (34) zu bilden, wobei die gewickelte Karkasseneinheit (52) axial durch zwei axiale Ränder (52A, 52B) der gewickelten Karkasseneinheit (52) begrenzt wird und Karkassenverstärkungselemente (340) aus Draht beinhaltet, die sich im Wesentlichen parallel zueinander axial von einem axialen Rand (52A, 52B) zu dem anderen axialen Rand (52A, 52B) der gewickelten Karkasseneinheit (52) erstrecken, wobei sich jedes Karkassenverstärkungselement (340) aus Draht in der oder jeder Karkassenlage (51) gemäß einer Hauptrichtung (K3) jedes Karkassenverstärkungselements (340) aus Draht erstreckt, wobei die Hauptrichtung (K3) jedes Karkassenverstärkungselements (340) aus Draht in der oder jeder Karkassenlage (51) mit der Umfangsrichtung (Z) des Trägers (60) einen Anfangswinkel (A3) jedes Karkassenverstärkungselements (340) aus Draht bildet,
- Bilden, durch das Wickeln einer Arbeitslage (49) oder mehrerer Arbeitslagen (50) radial außenliegend zu der gewickelten Karkasseneinheit (52), einer gewickelten Arbeitseinheit (50), die dazu bestimmt ist, die Arbeitsschicht (18) zu bilden, wobei die gewickelte Arbeitseinheit (50) axial durch zwei axiale Ränder (50A, 50B) der gewickelten Arbeitseinheit (50) begrenzt wird und Arbeitsverstärkungselemente (180) aus Draht beinhaltet, die sich im Wesentlichen parallel zueinander axial von einem axialen Rand (50A, 50B) zu dem anderen axialen Rand (50A, 50B) der gewickelten Arbeitseinheit (50) erstrecken, wobei sich jedes Arbeitsverstärkungselement (180) aus Draht in der oder jeder Arbeitslage (49) gemäß einer Hauptrichtung (K2) jedes Arbeitsverstärkungselements (180) aus Draht in der oder jeder Arbeitslage (49) erstreckt, wobei die Hauptrichtung (K2) jedes Arbeitsverstärkungselements (180) aus Draht in der oder jeder Arbeitslage (49) mit der Umfangsrichtung (Z) des Trägers (60) einen Anfangswinkel (A2) jedes Arbeitsverstärkungselements (180) aus Draht bildet, wobei die gewickelte Karkasseneinheit (52) und die gewickelte Arbeitseinheit (50) eine Anordnung (58) mit im Wesentlichen zylindrischer Form um die Hauptachse (A) des Trägers (60) bilden,
- Verformen der Anordnung (58) mit im Wesentlichen zylindrischer Form um die Hauptachse (A) des Trägers (60), um eine Anordnung (58) mit im Wesentlichen torusförmiger Form um die Hauptachse (A) des Trägers (60) zu erhalten, sodass:
- die Hauptrichtung (K3) jedes Karkassenverstärkungselements (340) aus Draht mit der Umfangsrichtung (z) des Trägers (60) Folgendes bildet:
- einen Endwinkel (B3S) jedes Karkassenverstärkungselements (340) aus Draht, der in einem Abschnitt (52S) der gewickelten Karkasseneinheit (52), der sich radial direkt unter der gewickelten Arbeitseinheit (50) axial erstreckt, als Absolutwert gesehen in jedem Fall kleiner als 80° ist,
- einen Endwinkel (B3F) jedes Karkassenverstärkungselements (340) aus Draht, der in einem Abschnitt (52F) der gewickelten Karkasseneinheit (52), der dazu bestimmt ist, sich in jeder Flanke (22) radial zu erstrecken, als Absolutwert gesehen von 80° bis 90° reicht,
- die Hauptrichtung (K2) jedes Arbeitsverstärkungselements (180) aus Draht mit der Umfangsrichtung (z) des Trägers (60) einen Endwinkel (B2) jedes Arbeitsverstärkungselements (180) aus Draht bildet, der als Absolutwert gesehen in jedem Fall größer als 10° ist, wobei das Verfahren **dadurch gekennzeichnet ist, dass** während des Schritts des Bildens der gewickelten Karkasseneinheit (52), wobei die gewickelte Karkasseneinheit (52) zwei Umfangsendränder (54A, 54B) aufweist, die sich axial von einem der axialen Ränder (52A, 52B) zu dem anderen der axialen Ränder (52A, 52B) der gewickelten Karkasseneinheit (52) erstrecken, eine der folgenden Alternativen I, II, III umgesetzt wird:
I - Bilden der gewickelten Karkasseneinheit (52) so, dass mindestens in dem Abschnitt (52S) der gewickelten Karkasseneinheit (52), der dazu bestimmt ist, sich radial direkt unter der gewickelten Arbeitseinheit (50) axial zu erstrecken, eine Verbindung (56) zwischen den zwei Umfangsendrändern (54A, 54B) der gewickelten Karkasseneinheit (52) durch Aneinanderstoßen ohne das Bilden einer Überlagerung zwischen einem Karkassenverstärkungselement (340) aus Draht eines der Umfangsendränder (54A, 54B) der gewickelten Karkasseneinheit (52) und einem Karkassenverstärkungselement (340) aus Draht des anderen der Umfangsendränder (54A, 54B) der gewickelten Karkasseneinheit (52) gebildet wird,
II - Bilden der gewickelten Karkasseneinheit (52) so, dass mindestens in dem Abschnitt (52S) der gewickelten Karkasseneinheit (52), der dazu bestimmt ist, sich radial direkt unter der gewickelten Arbeitseinheit (50) axial zu erstrecken, eine Verbindung (56) zwischen den zwei Umfangsendrändern (54A, 54B) der gewickelten Karkasseneinheit durch Überlappen so gebildet wird, dass eine radiale Überlagerung zwischen mindestens einem Karkassenverstärkungselement (340) aus Draht eines der Umfangsendränder (54A, 54B) der gewickelten Karkasseneinheit und mindestens einem Karkassenverstärkungselement (340) aus Draht des anderen der Umfangsendränder (54A, 54B) der gewickelten Karkasseneinheit gebildet wird, sodass ohne einen Schritt des Bildens der gewickelten Arbeitseinheit (50) vor dem Verformungsschritt der Schritt des Verformens, der unter identischen Bedingungen umgesetzt wird, eine Öffnung der Verbindung (56) bewirken würde,
III - Bilden der gewickelten Karkasseneinheit (52) so, dass:
- die zwei Umfangsendränder (54A, 54B) der gewickelten Karkasseneinheit umfangsmäßig voneinander beabstandet sind,
- während des Schritts des Bildens der gewickelten Arbeitseinheit (50) ein Trennungsraum zwischen den zwei Umfangsendrändern (54A, 54B) der gewickelten Karkasseneinheit (52) besteht,
mindestens in dem Abschnitt (52S) der gewickelten Karkasseneinheit (52), der dazu bestimmt ist, sich radial direkt unter der gewickelten Arbeitseinheit (50) axial zu erstrecken.

2. Verfahren nach dem vorhergehenden Anspruch, wobei während des Schritts des Bildens der gewickelten Karkasseneinheit (52) eine der Alternativen I oder II umgesetzt wird.

3. Verfahren nach dem vorhergehenden Anspruch, wobei während des Schritts des Bildens der gewickelten Karkasseneinheit (52) die Alternativen I umgesetzt wird.

4. Verfahren nach einem beliebigen der vorhergehenden Ansprüche, wobei nach dem Schritt des Verformens der Anordnung (58) radial außenliegend zu der Anordnung (58) mit im Wesentlichen torusförmiger Form eine gewickelte Umreifungseinheit angeordnet wird, die dazu bestimmt ist, eine Umreifungsbewehrung (17) zu bilden, wobei die gewickelte Umreifungseinheit durch schraubenförmiges Wickeln mindestens eines Umreifungsverstärkungselements (170) aus Draht oder einer Umreifungslage, die durch Eintauchen eines oder mehrerer Umreifungsverstärkungselemente (170) aus Draht in eine elastomere Matrix erhalten wird, so gebildet wird, dass sie sich axial von einem axialen Rand zu dem anderen axialen Rand der gewickelten Umreifungseinheit erstreckt.

5. Verfahren nach einem beliebigen der vorhergehenden Ansprüche, wobei der Anfangswinkel (A2), der durch die Hauptrichtung (K2) jedes Arbeitsverstärkungselements (180) aus Draht mit der Umfangsrichtung (z) des Trägers (60) gebildet wird, als Absolutwert gesehen in jedem Fall größer als 0° ist, vorzugsweise von 4° bis 60° reicht und noch bevorzugter von 16° bis 47° reicht.

6. Verfahren nach einem beliebigen der vorhergehenden Ansprüche, wobei der Anfangswinkel (A3), der durch die Hauptrichtung (K3) jedes Karkassenverstärkungselements (340) aus Draht mit der Umfangsrichtung (z) des Trägers (60) gebildet wird, als Absolutwert gesehen in jedem Fall größer als 0° ist, vorzugsweise von 27° bis 150° reicht und noch bevorzugter von 56° bis 123° reicht.

7. Verfahren nach einem beliebigen der vorhergehenden Ansprüche, wobei der Endwinkel (B2), der durch die Hauptrichtung (K2) jedes Arbeitsverstärkungselements (180) aus Draht mit der Umfangsrichtung (z) des Trägers (60) gebildet wird, als Absolutwert gesehen von 15° bis 50°, vorzugsweise von 18° bis 30° reicht.

8. Verfahren nach einem beliebigen der vorhergehenden Ansprüche, wobei der Endwinkel (B3S), der durch die Hauptrichtung (K3) jedes Karkassenverstärkungselements (340) aus Draht mit der Umfangsrichtung (z) des Trägers (60) gebildet wird, in dem Abschnitt (52S) der gewickelten Karkasseneinheit (52), der sich radial direkt unter der gewickelten Arbeitseinheit (50) axial erstreckt, als Absolutwert gesehen größer als oder gleich 10° ist, vorzugsweise von 20° bis 75° reicht und noch bevorzugter von 35° bis 70° reicht.

9. Reifen (10), der durch ein Verfahren nach einem beliebigen der vorhergehenden Ansprüche erhalten wird.

10. Reifen (10) nach dem vorhergehenden Anspruch, wobei:
- die Arbeitsschicht (18) axial durch zwei axiale Ränder (18A, 18B) der Arbeitsschicht (18) begrenzt wird und die Arbeitsverstärkungselemente (180) aus Draht beinhaltet, die sich axial von einem axialen Rand (18A, 18B) zu dem anderen axialen Rand (18A, 18B) der Arbeitsschicht (18) im Wesentlichen parallel zueinander gemäß einer Hauptrichtung (D2) jedes Arbeitsverstärkungselements (180) aus Draht erstrecken, die mit der Umfangsrichtung (Z) des Reifens (10) einen Winkel (AT) bildet, der als Absolutwert gesehen in jedem Fall größer als 10° ist,
- die Karkassenschicht (34) axial durch zwei axiale Ränder (34A, 34B) der Karkassenschicht (34) begrenzt wird und die Karkassenverstärkungselemente (340) aus Draht beinhaltet, die sich axial von einem axialen Rand (34A, 34B) zu dem anderen axialen Rand (34A, 34B) der Karkassenschicht (34) erstrecken, wobei sich jedes Karkassenverstärkungselement (340) aus Draht gemäß einer Hauptrichtung (D3) jedes Karkassenverstärkungselements (340) aus Draht erstreckt, die mit der Umfangsrichtung (Z) des Reifens (10) Folgendes bildet:
- einen Winkel (ACS), der in einem Abschnitt (34S) der Karkassenschicht (34), der sich radial direkt unter der Arbeitsschicht (18) axial erstreckt, als Absolutwert gesehen in jedem Fall kleiner als 80° ist,
- einen Winkel (ACF), der in mindestens einem Abschnitt (34F) der Karkassenschicht (34), der sich radial in jeder Flanke (22) erstreckt, als Absolutwert gesehen von 80° bis 90° reicht.

11. Reifen (10) nach Anspruch 9 oder 10, wobei die Scheitelbewehrung (14) eine Umreifungsbewehrung (17) beinhaltet, die radial außenliegend zu der Arbeitsbewehrung (16) angeordnet ist, wobei die Umreifungsbewehrung (17) axial durch zwei axiale Ränder (17A, 17B) der Umreifungsbewehrung (17) begrenzt wird und mindestens ein Umreifungsverstärkungselement (170) aus Draht beinhaltet, das schraubenförmig um den Umfang gewickelt ist, sodass es sich axial von einem axialen Rand (17A, 17B) zu dem anderen axialen Rand (17A, 17B) der Umreifungsbewehrung (17) gemäß einer Hauptrichtung (D1) des oder jedes Umreifungsverstärkungselements (170) aus Draht erstreckt.

12. Reifen (10) nach dem vorhergehenden Anspruch, wobei die Hauptrichtung (D1) des oder jedes Umreifungsverstärkungselements (170) aus Draht, die Hauptrichtung (D2) jedes Arbeitsverstärkungselements (180) aus Draht und die Hauptrichtung (D3) jedes Karkassenverstärkungselements (340) aus Draht in einem Abschnitt (PS') des Reifens (10), der axial zwischen den axialen Rändern derjenigen Schicht oder derjenigen Bewehrung liegt, die von der Arbeitsschicht (18) und der Umreifungsbewehrung (17) axial am wenigstens breit ist, mit der Umfangsrichtung (Z) des Reifens (10) Winkel (D1, D2, D3) bilden, die als Absolutwert gesehen jeweils paarweise unterschiedlich sind.

13. Reifen (10) nach einem beliebigen der Ansprüche 9 bis 12, wobei die Hauptrichtung (D2) jedes Arbeitsverstärkungselements (180) aus Draht und die Hauptrichtung (D3) jedes Karkassenverstärkungselements (340) aus Draht in einem Abschnitt (PS) des Reifens (10), der axial zwischen den axialen Rändern (18A, 18B) der Arbeitsschicht (18) liegt, mit der Hauptrichtung (Z) des Reifens (10) Winkel (D2, D3) mit entgegengesetzten Ausrichtungen bilden.

14. Reifen (10) nach einem beliebigen der Ansprüche 9 bis 13, wobei die Hauptrichtung (D2) jedes Arbeitsverstärkungselements (180) aus Draht mit der Umfangsrichtung (Z) des Reifens (10) einen Winkel (AT) bildet, der als Absolutwert gesehen von 15° bis 50°, vorzugsweise von 18° bis 30° reicht.

15. Reifen (10) nach einem beliebigen der Ansprüche 9 bis 14, wobei die Hauptrichtung (D3) jedes Karkassenverstärkungselements (340) aus Draht in dem Abschnitt (34S) der Karkassenschicht (34), der sich radial direkt unter der Arbeitsschicht (18) axial erstreckt, mit der Umfangsrichtung (Z) des Reifens (10) einen Winkel (ACS) bildet, der als Absolutwert gesehen größer als oder gleich 10° ist, vorzugsweise von 20° bis 75° reicht und noch bevorzugter von 35° bis 70° reicht.

## Claims

1. Method for manufacturing a tyre (10) comprising a crown (12), two sidewalls (22) and two beads (24), each sidewall (22) connecting each bead (24) to the crown (12), the tyre (10) comprising a carcass reinforcement (32) anchored in each bead (24) and extending in each sidewall (22) and radially internally at the crown (12), the carcass reinforcement (32) comprising at least one carcass layer (34), the crown (12) comprising:
- a tread (20) intended to come into contact with the ground when the tyre (10) is rolling,
- a crown reinforcement (14) arranged radially between the tread (20) and the carcass reinforcement (32), the crown reinforcement (14) comprising a working reinforcement (16) comprising a single working layer (18),
in which method:
- there is formed, by winding a carcass ply (51) or a plurality of carcass plies (51) around a support (60) having a substantially cylindrical shape around a main axis (A), at least one wound carcass assembly (52) intended to form the carcass layer (34), the wound carcass assembly (52) being axially delimited by two axial edges (52A, 52B) of the wound carcass assembly (52) and comprising carcass filamentary reinforcing elements (340) extending substantially parallel to one another axially from one axial edge (52A, 52B) to the other axial edge (52A, 52B) of the wound carcass assembly (52), each carcass filamentary reinforcing element (340) extending, in the or each carcass ply (51), in a main direction (K3) of each carcass filamentary reinforcing element (340), the main direction (K3) of each carcass filamentary reinforcing element (340) in the or each carcass ply (51) forming, with the circumferential direction (Z) of the support (60), an initial angle (A3) of each carcass filamentary reinforcing element (340),
- there is formed, by winding a working ply (49) or a plurality of working plies (50), radially outside the wound carcass assembly (52), a wound working assembly (50) intended to form the working layer (18), the wound working assembly (50) being axially delimited by two axial edges (50A, 50B) of the wound working assembly (50) and comprising working filamentary reinforcing elements (180) extending substantially parallel to one another axially from one axial edge (50A, 50B) to the other axial edge (50A, 50B) of the wound working assembly (50), each working filamentary reinforcing element (180) extending, in the or each working ply (49), in a main direction (K2) of each working filamentary reinforcing element (180) in the or each working ply (49), the main direction (K2) of each working filamentary reinforcing element (180) in the or each working ply (49) forming, with the circumferential direction (Z) of the support (60), an initial angle (A2) of each working filamentary reinforcing element (180), the wound carcass assembly (52) and the wound working assembly (50) forming an assembly (58) of substantially cylindrical shape around the main axis (A) of the support (60),
- the assembly (58) of substantially cylindrical shape around the main axis (A) of the support (60) is deformed so as to obtain an assembly (58) of substantially toric shape around the main axis (A) of the support (60) so that:
- the main direction (K3) of each carcass filamentary reinforcing element (340) forms, with the circumferential direction (z) of the support (60):
- a final angle (B3S) of each carcass filamentary reinforcing element (340), in absolute value, strictly less than 80°, in a portion (52S) of the wound carcass assembly (52) extending axially in radial line with the wound working assembly (50),
- a final angle (B3F) of each carcass filamentary reinforcing element (340) ranging, in absolute value, from 80° to 90°, in a portion (52F) of the wound carcass assembly (52) intended to extend radially in each sidewall (22),
- the main direction (K2) of each working filamentary reinforcing element (180) forms, with the circumferential direction (z) of the support (60), a final angle (B2) of each working filamentary reinforcing element (180), in absolute value, strictly greater than 10°,
method **characterized in that**, during the step of forming the wound carcass assembly (52), the wound carcass assembly (52) having two circumferential end edges (54A, 54B) extending axially from one of the axial edges (52A, 52B) to the other of the axial edges (52A, 52B) of the wound carcass assembly (52), one of the following alternatives I, II, III is implemented:
I - the wound carcass assembly (52) is formed so as to form a junction (56) between the two circumferential end edges (54A, 54B) of the wound carcass assembly (52) by abutment without forming a superposition between a carcass filamentary reinforcing element (340) of one of the circumferential end edges (54A, 54B) of the wound carcass assembly (52) and a carcass filamentary reinforcing element (340) of the other of the circumferential end edges (54A, 54B) of the wound carcass assembly (52), at least in the portion (52S) of the wound carcass assembly (52) intended to extend axially in radial line with the wound working assembly (50),
II - the wound carcass assembly (52) is formed so as to form a junction (56) between the two circumferential end edges (54A, 54B) of the wound carcass assembly by overlapping so as to form a radial superposition between at least one carcass filamentary reinforcing element (340) of one of the circumferential end edges (54A, 54B) of the wound carcass assembly and at least one carcass filamentary reinforcing element (340) of the other of the circumferential end edges (54A, 54B) of the wound carcass assembly, at least in the portion (52S) of the wound carcass assembly (52) intended to extend axially in radial line with the wound working assembly (50), so that, without a step of forming the wound working assembly (50) prior to the deformation step, the deformation step implemented under identical conditions would lead to an opening of the junction (56),
III - the wound carcass assembly (52) is formed so that:
- the two circumferential end edges (54A, 54B) of the wound carcass assembly are circumferentially spaced from one another,
- there is a separation space between the two circumferential end edges (54A, 54B) of the wound carcass assembly (52) during the step of forming the working assembly (50), at least in the portion (52S) of the wound carcass assembly (52) intended to extend axially in radial line with the wound working assembly (50).

2. Method according to the preceding claim, in which, during the step of forming the wound carcass assembly (52), one of the alternatives I or II is implemented.

3. Method according to the preceding claim, in which, during the step of forming the wound carcass assembly (52), the alternative I is implemented.

4. Method according to any one of the preceding claims, in which, subsequent to the step of deforming the assembly (58), there is arranged, radially outside the assembly (58) of substantially toric shape, a wound hooping assembly intended to form a hoop reinforcement (17), the wound hooping assembly being formed by helical winding of at least one hooping filamentary reinforcing element (170) or of a hooping ply obtained by embedding one or more hooping filamentary reinforcing elements (170) in an elastomeric matrix, so as to extend axially from one axial edge to the other axial edge of the wound hooping assembly.

5. Method according to any one of the preceding claims, in which the initial angle (A2) formed by the main direction (K2) of each working filamentary reinforcing element (180) with the circumferential direction (z) of the support (60) is, in absolute value, strictly greater than 0°, preferably ranges from 4° to 60° and more preferably ranges from 16° to 47°.

6. Method according to any one of the preceding claims, in which the initial angle (A3) formed by the main direction (K3) of each carcass filamentary reinforcing element (340) with the circumferential direction (z) of the support (60) is, in absolute value, strictly greater than 0°, preferably ranges from 27° to 150° and more preferably ranges from 56° to 123°.

7. Method according to any one of the preceding claims, in which the final angle (B2) formed by the main direction (K2) of each working filamentary reinforcing element (180) with the circumferential direction (z) of the support (60) ranges, in absolute value, from 15° to 50°, preferably from 18° to 30°.

8. Method according to any one of the preceding claims, in which the final angle (B3S) formed by the main direction (K3) of each carcass filamentary reinforcing element (340) with the circumferential direction (z) of the support (60) is, in absolute value, greater than or equal to 10°, preferably ranges from 20° to 75° and more preferably ranges from 35° to 70°, in the portion (52S) of the wound carcass assembly (52) extending axially in radial line with the wound working assembly (50).

9. Tyre (10) obtained by a method according to any one of the preceding claims.

10. Tyre (10) according to the preceding claim, in which:
- the working layer (18) is axially delimited by two axial edges (18A, 18B) of the working layer (18) and comprises the working filamentary reinforcing elements (180) extending axially from one axial edge (18A, 18B) to the other axial edge (18A, 18B) of the working layer (18) substantially parallel to one another in a main direction (D2) of each working filamentary reinforcing element (180) forming, with the circumferential direction (Z) of the tyre (10), an angle (AT), in absolute value, strictly greater than 10°,
- the carcass layer (34) is axially delimited by two axial edges (34A, 34B) of the carcass layer (34) and comprises the carcass filamentary reinforcing elements (340) extending axially from one axial edge (34A, 34B) to the other axial edge (34A, 34B) of the carcass layer (34), each carcass filamentary reinforcing element (340) extending in a main direction (D3) of each carcass filamentary reinforcing element (340) forming, with the circumferential direction (Z) of the tyre (10):
- an angle (ACS), in absolute value, strictly less than 80° in a portion (34S) of the carcass layer (34) extending axially in radial line with the working layer (18),
- an angle (ACF), in absolute value, ranging from 80° to 90° in at least one portion (34F) of the carcass layer (34) extending radially in each sidewall (22).

11. Tyre (10) according to Claim 9 or 10, in which the crown reinforcement (14) comprises a hoop reinforcement (17) arranged radially outside the working reinforcement (16), the hoop reinforcement (17) being axially delimited by two axial edges (17A, 17B) of the hoop reinforcement (17) and comprising at least one hooping filamentary reinforcing element (170) wound circumferentially helically so as to extend axially from one axial edge (17A, 17B) to the other axial edge (17A, 17B) of the hoop reinforcement (17) in a main direction (D1) of the or each hooping filamentary reinforcing element (170).

12. Tyre (10) according to the preceding claim, in which the main direction (D1) of the or each hooping filamentary reinforcing element (170), the main direction (D2) of each working filamentary reinforcing element (180) and the main direction (D3) of each carcass filamentary reinforcing element (340) form, with the circumferential direction (Z) of the tyre (10), in a portion (PS') of the tyre (10) lying axially between the axial edges of the axially narrowest layer or reinforcement among the working layer (18) and the hoop reinforcement (17), paired angles (D1, D2, D3) different in absolute value.

13. Tyre (10) according to any one of Claims 9 to 12, in which the main direction (D2) of each working filamentary reinforcing element (180) and the main direction (D3) of each carcass filamentary reinforcing element (340) form, with the circumferential direction (Z) of the tyre (10), in a portion (PS) of the tyre (10) lying axially between the axial edges (18A, 18B) of the working layer (18), angles (D2, D3) of opposite orientations.

14. Tyre (10) according to any one of Claims 9 to 13, in which the main direction (D2) of each working filamentary reinforcing element (180) forms, with the circumferential direction (Z) of the tyre (10), an angle (AT) ranging, in absolute value, from 15° to 50°, preferably from 18° to 30°.

15. Tyre (10) according to any one of Claims 9 to 14, in which the main direction (D3) of each carcass filamentary reinforcing element (340) forms, with the circumferential direction (Z) of the tyre (10), an angle (ACS), in absolute value, greater than or equal to 10°, preferably ranging from 20° to 75° and more preferably ranging from 35° to 70°, in the portion (34S) of the carcass layer (34) extending axially in radial line with the working layer (18).
